(19) Europäisches Patentamt
European Patent Office
Office européen des brevets

(11) **EP 4 096 293 A1**

(12) **EUROPEAN PATENT APPLICATION**
published in accordance with Art. 153(4) EPC

(43) Date of publication:
**30.11.2022 Bulletin 2022/48**

(21) Application number: **20919918.1**

(22) Date of filing: **09.11.2020**

(51) International Patent Classification (IPC):
**H04W 36/00** (2009.01)

(52) Cooperative Patent Classification (CPC):
**H04W 36/00; H04W 36/08; H04W 36/30;**
**Y02D 30/70**

(86) International application number:
**PCT/CN2020/127536**

(87) International publication number:
**WO 2021/164332 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.02.2020 CN 202010105793**

(71) Applicant: **Huawei Technologies Co., Ltd.**
**Shenzhen, Guangdong 518129, (CN)**

(72) Inventors:
• **YANG, Rui**
**Shenzhen, Guangdong 518129 (CN)**
• **DOU, Fenghui**
**Shenzhen, Guangdong 518129 (CN)**
• **JIN, Hui**
**Shenzhen, Guangdong 518129 (CN)**

(74) Representative: **Maiwald GmbH**
**Elisenhof**
**Elisenstraße 3**
**80335 München (DE)**

(54) **NETWORK SELECTION METHOD AND APPARATUS**

(57) This application provides a network selection method and apparatus. In embodiments of this application, cell information of cells on which a terminal device camps may be classified in terms of a fixed route or a fixed place, and different preprocessing can be performed on different categories of cell information according to a preset rule, to obtain different categories of valid camped cells of the terminal device. Then, a network selection policy applicable to the current terminal device is generated based on the valid camped cells in different categories. The network selection policy is used to indicate a next-hop cell of a cell on which the terminal device currently camps, so that the terminal device can perform targeted network search, to help reduce power consumption of the terminal device.

1800

```
Obtain first information, where the first information includes cell information
of a cell on which a terminal device camps                              ~ 1810

Obtain first cell information or second cell information from the cell
information, where the first cell information is cell information of a cell on
which the terminal device camps on a fixed route, and the second cell
information is cell information of a cell on which the terminal device camps in a
fixed place                                                             ~ 1820

Preprocess the first cell information or the second cell information according to
a preset rule, to obtain a valid camped cell                           ~ 1830

Obtain second information, where the second information includes cell
information of a first cell on which the terminal device currently camps ~ 1840

Determine that the cell information of the first cell is cell information on the
fixed route or cell information in the fixed place                      ~ 1850

When the cell information of the first cell is cell information on the fixed route,
determine a second cell in a first valid camped cell, or when the cell information
of the first cell is cell information in the fixed place, determine a second cell in
a second valid camped cell, where the second cell is a next-hop cell on which
the terminal device is to camp after camping on the first cell          ~ 1860
```

FIG. 18

EP 4 096 293 A1

**Description**

This application claims priority to Chinese Patent Application No. 202010105793.9, filed with the China National Intellectual Property Administration on February 19, 2020 and entitled "NETWORK SELECTION METHOD AND APPARATUS", which is incorporated herein by reference in its entirety.

**TECHNICAL FIELD**

This application relates to the communication field, and more specifically, to a network selection method and apparatus.

**BACKGROUND**

According to big data statistics on a live network, power consumption of a modem (modem) in a terminal device accounts for 64% of power consumption of the entire terminal device. Standby power consumption and data service power consumption are main parts of the power consumption of the modem. For example, for a typical user, the standby power consumption accounts for 23.24%.

Currently, if the terminal device is in an idle (idle) state, the terminal device may select, through measurement, a neighboring cell that meets a criterion R, to perform cell reselection. If the terminal device is in a connected (connected) state, the terminal device may report an A3 event through neighboring cell measurement configured on a network side, to perform cell handover. In this way, the terminal device can use only a signal strength of the neighboring cell as a criterion for determining a next-hop cell. Consequently, the terminal device measures a large quantity of neighboring cells, resulting in high power consumption of the modem.

Therefore, how to reduce the power consumption of the terminal device is an urgent problem to be resolved.

**SUMMARY**

This application provides a network selection method and apparatus, so that a terminal device can perform targeted network search, to help reduce power consumption of the terminal device.

According to a first aspect, a network selection method is provided, and the method is applied to a terminal device. The method includes the following processes or steps:

obtaining first information, where the first information includes cell information of a cell on which the terminal device camps;

obtaining first cell information or second cell information from the cell information, where the first cell information is cell information of a cell on which the terminal device camps on a fixed route, and the second cell information is cell information of a cell on which the terminal device camps in a fixed place;

preprocessing the first cell information or the second cell information according to a preset rule, to obtain a valid camped cell, where the valid camped cell includes a first valid camped cell or a second valid camped cell, the first valid camped cell is obtained by preprocessing the first cell information according to a first preset rule, and the second valid camped cell is obtained by preprocessing the second cell information according to a second preset rule; and

obtaining second information, where the second information includes cell information of a first cell on which the terminal device currently camps;

determining that the cell information of the first cell is cell information on the fixed route or cell information in the fixed place; and

when the cell information of the first cell is cell information on the fixed route, determining a second cell in the first valid camped cell, or when the cell information of the first cell is cell information in the fixed place, determining a second cell in the second valid camped cell, where the second cell is a next-hop cell on which the terminal device is to camp after camping on the first cell.

Therefore, in this embodiment of this application, cell information of cells on which the terminal device camps may be classified in terms of a fixed route or a fixed place, and different preprocessing can be performed on different categories of cell information according to the preset rule, to obtain different categories of valid camped cells of the terminal device. Then, a network selection policy applicable to the current terminal device is generated based on the valid camped cells in different categories. The network selection policy is used to indicate a next-hop cell of a cell on which the terminal device currently camps, so that the terminal device can perform targeted network search, to help reduce power consumption of the terminal device.

With reference to the first aspect, in some implementations of the first aspect, the cell information further includes a signal received power of the terminal device in the camped cell when the terminal device is handed over from the camped cell to the next-hop cell.

The method further includes:

determining, based on the at least one signal received power, a cell measurement threshold of the terminal device in the camped cell.

The cell measurement threshold includes a measurement start threshold and/or a leaving threshold, the measurement start threshold is a threshold for starting cell measurement on the next-hop cell of the camped cell, the leaving threshold is a threshold for performing cell measurement on a neighboring cell of the camped cell, the cell measurement threshold is determined based on a largest signal received power in the at least one signal received power, and the leaving threshold is determined based on a smallest signal received power in the at least one signal received power.

In this embodiment of this application, when a signal received power of the terminal device in the first cell is greater than the measurement start threshold (in this case, it may be considered that quality of a signal of the terminal device in the first cell is good), measurement is not performed on a specific neighboring cell or all predicted neighboring cells. Only when the signal received power in the first cell is less than or equal to the measurement start threshold (in this case, it may be considered that the quality of the signal of the terminal device in the first cell is poor), measurement is performed on the specific neighboring cell or all predicted neighboring cells. This helps reduce a waste of measurement performed by the terminal device, and reduce the power consumption of the terminal device.

In addition, in this embodiment of this application, when the signal received power of the terminal device in the first cell is less than or equal to the leaving threshold (in this case, it may be considered that the quality of the signal of the terminal device in the first cell is already very poor), cell measurement is performed based on an existing neighboring cell measurement mechanism, instead of measurement on only a predicted cell (for example, the second cell), so that a probability that the terminal device obtains a neighboring cell through measurement is increased.

Therefore, in this embodiment of this application, a receive power of the terminal device in the first cell when the terminal device is handed over to the next-hop cell on a cell handover path is obtained, and the measurement start threshold and/or the leaving threshold for performing cell measurement by the terminal device in the first cell are/is determined based on the receive power, so that the terminal device can perform cell measurement based on the measurement start threshold and/or the leaving threshold, to help reduce a quantity of neighboring cells measured by the terminal device, a quantity of times of measuring neighboring cells, or a quantity of times of cell reselection, so as to help reduce the power consumption of the terminal device.

Optionally, the measurement start threshold may alternatively be obtained by offsetting the largest signal received power, for example, is a sum of the largest signal received power and $\delta 1$. In addition, the leaving threshold may alternatively be obtained by offsetting the smallest signal received power, for example, a sum of the smallest signal received power and $\delta 2$. Herein, $\delta 1$ or $\delta 2$ may be a positive value or a negative value. This is not limited in this embodiment of this application.

When the first cell information is obtained from the cell information, the first valid camped cell includes the first cell and the second cell, and the second cell is a historical next-hop cell that is of the first cell and that is on the fixed route. The method further includes:

after the terminal device is disconnected from a network in the second cell, when $t < T_{min}$, determining to disable cell measurement of the terminal device.

In this case, the terminal device is about to have or has no available network in the time period. In this case, if the terminal device continues to perform cell measurement, it is very likely that the terminal device cannot find a network. Based on this, in this embodiment of this application, cell measurement of the terminal device may be disabled within a time period less than $T_{min}$, to reduce the power consumption of the terminal device.

When $T_{min} \leq t < k \times T_{min} + (1-k)T_{max}$, it is determined to configure a measurement interval of the terminal device as a first measurement interval, where $0 < k < 1$.

When $t \geq k \times T_{min} + (1-k)T_{max}$, it is determined to configure a measurement interval of the terminal device as a second measurement interval, where the second measurement interval is less than the first measurement interval.

When $T_{min} \leq t < k \times T_{min} + (1-k)T_{max}$ is met, there is still a low probability that the terminal device recovers the network. In this case, a long measurement interval may be set, so that the terminal device does not need to perform neighboring cell measurement frequently. This helps reduce the power consumption of the terminal device. When $t \geq k \times T_{min} + (1-k)T_{max}$ is met, there is a high probability that the terminal device recovers the network. In this case, a short measurement interval may be set, so that the terminal device can recover the network more quickly.

Herein, t represents duration after a moment at which the terminal device is disconnected from the network in the second cell, $T_{max}$ represents statistically obtained maximum recovery time for recovering connection after the terminal device is disconnected from the network in the second cell, and $T_{min}$ represents statistically obtained minimum recovery time for recovering connection after the terminal device is disconnected from the network in the second cell.

Therefore, in this embodiment of this application, it is determined whether the terminal device is disconnected from the network in the second cell in a historical record, and when the terminal device is disconnected from the network in the second cell, measurement policies that are applicable to different time periods after the terminal device is currently disconnected from the network in the second cell are generated based on recovery time after a historical network disconnection of the terminal device, so that the terminal device can perform targeted cell measurement. This helps reduce invalid measurement of the terminal device, to help reduce the power consumption of the terminal device.

With reference to the first aspect, in some implementations of the first aspect, when the first cell information is obtained from the cell information, the first valid camped cell includes the first cell, the second cell, and a third cell, and the second cell and the third cell are two different historical next-hop cells that are of the first cell and that are on the fixed route.

First frequency of the second cell serving as a next-hop node of the terminal device in the first cell is greater than second frequency of the third cell serving as a next-hop node of the terminal device in the first cell; or

a first signal strength of the terminal device in the second cell is greater than a second signal strength of the terminal device in the third cell; or

first power consumption of the terminal device in the second cell is greater than second power consumption of the terminal device in the third cell, where the first power consumption is determined based on a discontinuous reception DRX cycle and invalid radio resource control RRC connection duration of the terminal device in the second cell, and the second power consumption is determined based on a discontinuous reception DRX cycle and invalid radio resource control RRC connection duration of the terminal device in the third cell.

Therefore, in this embodiment of this application, the cell handover path of the terminal device on the fixed route is obtained, and when the current camped first cell exists on the cell handover path, a next-hop cell of the terminal device in the first cell is predicted based on a next-hop cell that is of the first cell and that is on the cell handover path, so that the terminal device can perform targeted network search based on the predicted next-hop cell, to help reduce the quantity of neighboring cells measured by the terminal device or the quantity of times of cell reselection, so as to help reduce the power consumption of the terminal device.

With reference to the first aspect, in some implementations of the first aspect, the preprocessing the first cell information or the second cell information according to a preset rule, to obtain a valid camped cell includes:
when the first cell information is obtained from the cell information, removing, from cells corresponding to the first cell information, cells between which the terminal device performs ping-pong handover, to obtain the first valid camped cell.

In this way, when the network selection policy is determined based on the valid camped cell, it can be ensured that the terminal device stably camps on the next-hop cell indicated by the network selection policy.

With reference to the first aspect, in some implementations of the first aspect, the removing, from cells corresponding to the first cell information, cells between which the terminal device performs ping-pong handover, to obtain the first valid camped cell includes:

obtaining a first cell identifier list corresponding to the fixed route, where the first cell identifier list includes at least two cell identifiers that are in a one-to-one correspondence with at least two cells on the fixed route, and an order of the at least two cell identifiers in the first cell identifier list is the same as an order of the at least two cells on the fixed route; and

removing, based on the first cell identifier list, the cells between which the terminal device performs ping-pong handover, to obtain the first valid camped cell.

In this way, when the network selection policy is determined based on a valid cell handover path, it can be ensured that the terminal device stably camps on the next-hop cell indicated by the network selection policy.

With reference to the first aspect, in some implementations of the first aspect, the removing cells between which the terminal device performs ping-pong handover includes:

setting a first time window in the first cell identifier list, where the first time window includes three consecutive cell identifiers in the first cell identifier list;

when a condition that a cell identifier that is in the first cell identifier list and previously adjacent to the first time window is different from the 1st cell identifier in the first time window, and the 1st cell identifier is equal to the last cell identifier in the first time window is met, obtaining a first cell identifier after the first time window in the first cell identifier list, where the first cell identifier is different from the 2nd cell identifier and the last cell identifier in the first time window; and

when a condition that a second cell identifier previously adjacent to the first cell identifier is the same as the 1st cell identifier is met, deleting cell identifiers from the 2nd cell identifier to the second cell identifier from the first cell identifier list; or

when a condition that the second cell identifier is different from the 1st cell identifier is met, deleting cell identifiers from the last cell identifier to the second cell identifier from the first cell identifier list.

In this way, in this embodiment of this application, a cell handover path that does not include two cells that are ping-pong cells can be obtained.

With reference to the first aspect, in some implementations of the first aspect, the removing cells between which the terminal device performs ping-pong handover includes:

setting a second time window in the first cell identifier list, where the second time window includes four consecutive cell identifiers in the first cell identifier list;
when a condition that a cell identifier that is in the first cell identifier list and previously adjacent to the second time window is different from the 1st cell identifier in the second time window, and the 1st cell identifier is equal to the last cell identifier in the second time window is met, obtaining a third cell identifier after the second time window in the first cell identifier list, where the third cell identifier is different from the 2nd cell identifier, the 3rd cell identifier, and the last cell identifier in the first time window; and
when a condition that a fourth cell identifier previously adjacent to the third cell identifier is the same as the 1st cell identifier is met, deleting cell identifiers from the 2nd cell identifier to the fourth cell identifier from the first cell identifier list;
when a condition that the fourth cell identifier is different from the 1st cell identifier, and the fourth cell identifier is the same as the 2nd cell identifier is met, deleting cell identifiers from the 3rd cell identifier to the fourth cell identifier from the first cell identifier list; or
when a condition that the fourth cell identifier is different from the 1st cell identifier, and the fourth cell identifier is different from the 2nd cell identifier is met, deleting cell identifiers from the last cell identifier to the fourth cell identifier from the first cell identifier list.

In this way, in this embodiment of this application, a cell handover path that does not include three cells that are ping pong cells can be obtained.

With reference to the first aspect, in some implementations of the first aspect, the preprocessing the first cell information or the second cell information according to a preset rule, to obtain a valid camped cell includes:

when the second cell information is obtained from the cell information, determining, from cells corresponding to the second cell information, at least two cells with longest camping duration, lowest power consumption, or highest received signal strengths of the terminal device, to obtain the second valid camped cell, where the second valid camped cell includes the at least two cells; and
determining, from the second valid camped cell, cells between which the terminal device performs ping-pong handover.

In this way, when the cell on which the terminal device is to camp is determined in the second valid camped cell, it can be ensured that the terminal device stably camps on the cell indicated by the network selection policy.

With reference to the first aspect, in some implementations of the first aspect, the determining a second cell in the second valid camped cell includes:

when the first cell does not belong to the at least two cells, using at least one of the at least two cells as the second cell;
when the first cell belongs to the at least two cells, and the terminal device does not perform ping-pong handover between the first cell and another cell of the at least two cells other than the first cell, using at least one of the at least two cells as the second cell;
when the first cell belongs to the at least two cells, and the terminal device performs ping-pong handover between the first cell and a fourth cell of the at least two cells other than the first cell, using another cell of the at least two cells other than the first cell and the fourth cell as the second cell; or
when the first cell belongs to the at least two cells, and the terminal device performs ping-pong handover between the first cell and a fifth cell that does not belong to the at least two cells, using a cell in the at least two cells other than the first cell as the second cell.

Therefore, in this embodiment of this application, the next-hop cell of the terminal device in the first cell is predicted by obtaining a historical record about cell camping of the terminal device in the fixed place and based on a historical camping status of the terminal device in the cell in the fixed place, so that the terminal device can perform targeted network search based on the predicted cell. This helps reduce the quantity of neighboring cells measured by the terminal device, or the quantity of times of measuring the neighboring cells, or the quantity of times of cell reselection, to help reduce the power consumption of the terminal device.

With reference to the first aspect, in some implementations of the first aspect, the first information further includes information about time when the terminal device camps on the cell corresponding to the cell information.

The obtaining first cell information or second cell information from the cell information includes:

determining, based on the time information, that the cell information is the first cell information or the second cell information.

Because activities of a user in some specific time periods (for example, workdays) are regular, a classification manner of distinguishing cells on the fixed route and in the fixed place based on time periods can not only reduce complexity of cell classification, but also accurately classify the cells.

With reference to the first aspect, in some implementations of the first aspect, the first information further includes an identifier of Wi-Fi to which the terminal device is connected when the terminal device camps on the cell corresponding to the cell information.

The obtaining first cell information or second cell information from the cell information includes:

determining, based on the identifier of the Wi-Fi, that the cell information is the first cell information or the second cell information.

With reference to the first aspect, in some implementations of the first aspect, the obtaining first information includes:

obtaining, from a modem, the cell information of the cell on which the terminal device camps.

With reference to the first aspect, in some implementations of the first aspect, the method further includes:

sending third information to the modem, where the third information indicates cell information of the second cell.

With reference to the first aspect, in some implementations of the first aspect, before the obtaining first information, the method further includes:

receiving first configuration information from an application server AP, where the first configuration information is used to enable a power consumption optimization mode.

According to a second aspect, an embodiment of this application provides a network selection apparatus, configured to perform the method in any one of the first aspect or the possible implementations of the first aspect. Specifically, the apparatus includes a module configured to perform the method in any one of the first aspect or the possible implementations of the first aspect.

According to a third aspect, an embodiment of this application provides a network selection apparatus, including a memory and a processor. The processor is configured to execute instructions stored in the memory. When the processor executes the instructions stored in the memory, the execution enables the processor to perform the method in any one of the first aspect or the possible implementations of the first aspect.

According to a fourth aspect, an embodiment of this application provides a terminal device, including the network selection apparatus according to any one of the second aspect or the possible implementations of the second aspect, or the network selection apparatus according to any one of the third aspect or the possible implementations of the third aspect.

Optionally, the terminal device further includes a modem, configured to send, to the network selection apparatus, cell information of a cell on which the terminal device camps. The modem is further configured to receive third information sent by the network selection apparatus. The third information indicates cell information of a second cell.

Optionally, the terminal device may further include an application server AP, configured to send first configuration information to the network selection apparatus. The first configuration information is used to configure a working mode of a network selection main control module as a power consumption optimization mode.

Therefore, in this embodiment of this application, the network selection apparatus can interact with the AP, the modem, and a sensor to jointly implement a network selection function. A system architecture according to this embodiment of this application can be compatible with an existing network search architecture. Therefore, the system architecture in this embodiment of this application is characterized by low coupling, high cohesion, intelligent processing, and the like, and is further characterized by ease of transplantation and upgrade.

According to a fifth aspect, an embodiment of this application provides a computer-readable medium, configured to store a computer program. The computer program includes instructions used to perform the method according to any one of the first aspect or the possible implementations of the first aspect.

According to a sixth aspect, an embodiment of this application further provides a computer program product including instructions. When the computer program product runs on a computer, the computer is enabled to perform the method in any one of the first aspect or the possible implementations of the first aspect.

According to a seventh aspect, a chip apparatus is provided, including an input interface, an output interface, at least one processor, and a memory. The input interface, the output interface, the processor, and the memory communicate with each other through an internal connection path, the processor is configured to execute code in the memory, and when the processor executes the code, the chip apparatus implements the method in any one of the first aspect or the possible implementations of the first aspect.

**BRIEF DESCRIPTION OF DRAWINGS**

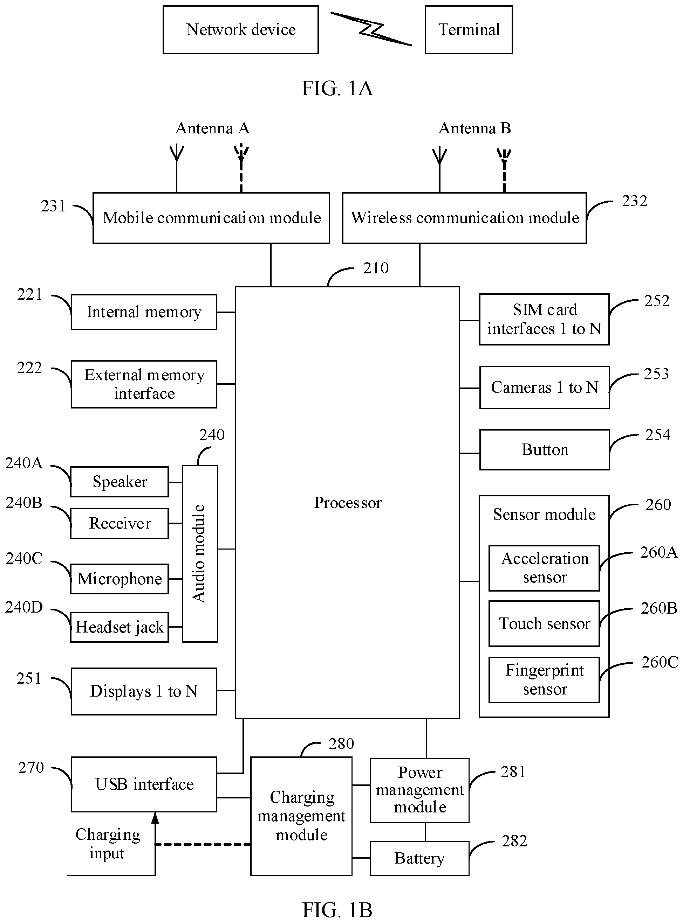

FIG. 1A is a schematic diagram of an architecture of a communication system applicable to an embodiment of this application;

FIG. 1B is a schematic diagram of a structure of a terminal device applicable to an embodiment of this application;

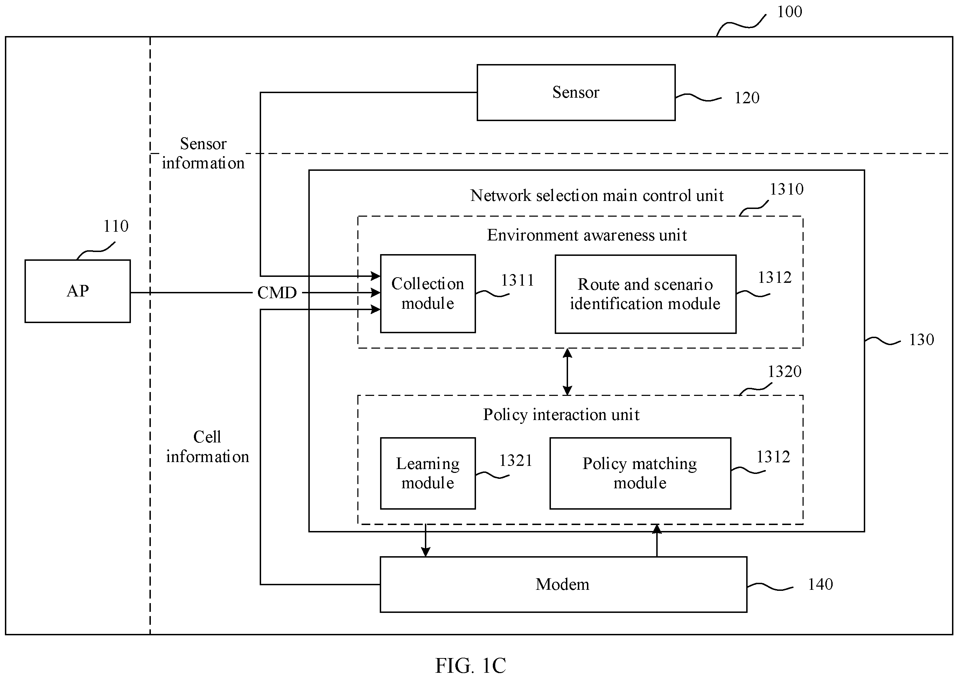

FIG. 1C is another schematic diagram of a structure of a terminal device applicable to an embodiment of this application;

FIG. 1D-1 to FIG. 1D-3 are a schematic diagram of a manner of enabling a power consumption optimization mode according to an embodiment of this application;

FIG. 2 is a schematic flowchart of a network selection method according to an embodiment of this application;

FIG. 3 is a schematic flowchart of another network selection method according to an embodiment of this application;

FIG. 4 is a schematic flowchart of a ping-pong cell removing method according to an embodiment of this application;

FIG. 5 shows an example of a cell identifier list and a time window;

FIG. 6 shows a specific example of deletion in a cell identifier list;

FIG. 7 shows another specific example of deletion in a cell identifier list;

FIG. 8 is a schematic flowchart of another ping-pong cell removing method according to an embodiment of this application;

FIG. 9 shows another example of a cell identifier list and a time window;

FIG. 10 shows still another specific example of deletion in a cell identifier list;

FIG. 11 shows yet another specific example of deletion in a cell identifier list;

FIG. 12 shows still yet another specific example of deletion in a cell identifier list;

FIG. 13 is a schematic flowchart of still another network selection method according to an embodiment of this application;

FIG. 14 is a schematic flowchart of yet another network selection method according to an embodiment of this application;

FIG. 15 shows a specific example of a DRX threshold and an invalid RRC connection duration threshold;

FIG. 16 is a schematic flowchart of still yet another network selection method according to an embodiment of this application;

FIG. 17 is a schematic flowchart of a further network selection method according to an embodiment of this application;

FIG. 18 is a schematic flowchart of a still further network selection method according to an embodiment of this application;

FIG. 19 is a schematic block diagram of a network selection apparatus according to an embodiment of this application; and

FIG. 20 is a schematic block diagram of another network selection apparatus according to an embodiment of this application.

**DESCRIPTION OF EMBODIMENTS**

The embodiments of this application may be applied to a mobile communication system, for example, a global system for mobile communications (global system for mobile communications, GSM), a general packet radio service (general packet radio service, GPRS) communication system, a code division multiple access (code division multiple access, CDMA) communication system, a wideband code division multiple access (wideband code division multiple access, WCDMA) communication system, a time-division code division multiple access (time-division code division multiple access, TD-SCDMA) communication system, a long term evolution (long term evolution, LTE) communication system, a 5th generation (5th Generation, 5G) communication system (for example, a next radio (next radio, NR) system), a future communication system, or the like.

The following describes technical solutions of this application with reference to accompanying drawings.

FIG. 1A is a schematic diagram of an architecture of a communication system applicable to an embodiment of this application. Specifically, the communication system shown in FIG. 1A includes a network device and a terminal device. The communication system shown in FIG. 1A is only an example for description.

It should be understood that the network device in this embodiment of this application may also be referred to as an access network device, and is configured to provide a cell, so that the terminal device accesses a network.

The network device in this embodiment of this application may be a base station, an access point, or the like, for example, a base transceiver station (base transceiver station, BTS) in the GSM communication system or the CDMA communication system, a NodeB (NodeB) in the WCDMA communication system, an evolved NodeB (evolutional NodeB, eNB) in the LTE communication system, and a gNB in the NR system. It should be noted that a quantity of network devices in the communication system and an implementation form are not limited in this embodiment of this application.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some terminals may be, for example, a mobile phone (mobile phone), a tablet computer, a laptop computer, a palmtop, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a future 5G network or a terminal device in an evolved public land mobile network (public land mobile network, PLMN), and the like. This is not limited in this embodiment of this application.

Specifically, the terminal device accesses the network through the cell provided by the network device. For example, when the terminal device is in an idle state, the terminal device may perform cell reselection through neighboring cell measurement. When the terminal device is in a connected state, the terminal device may perform cell handover through neighboring cell measurement. However, the terminal device can use only a signal strength of a neighboring cell as a criterion for determining a next-hop cell. In this way, the terminal device measures a large quantity of neighboring cells, resulting in high power consumption of a modem.

In view of this, this embodiment of this application provides a network selection method, to help the terminal device reduce the power consumption of the terminal during cell reselection, cell handover, or cell measurement, so as to improve user experience. The terminal device may obtain a historical record about cell camping of the terminal device, and determine a next-hop cell of a current camped cell based on the historical record about cell camping. Compared with the current technology in which the terminal device can use only the signal strength of the neighboring cell as the criterion for determining the next-hop cell, in this embodiment of this application, the terminal device can perform network selection according to a network selection policy, so that the terminal device can perform targeted network search. This reduces power consumption of the terminal device.

The following describes a terminal and embodiments for using such a terminal. For example, FIG. 1B is a schematic diagram of a structure of a terminal according to an embodiment of this application. Specifically, as shown in FIG. 1B, the terminal includes a processor 210, an internal memory 221, an external memory interface 222, an antenna A, a mobile communication module 231, an antenna B, a wireless communication module 232, an audio module 240, a speaker 240A, a receiver 240B, a microphone 240C, a headset interface 240D, a display 251, a subscriber identification module (subscriber identification module, SIM) card interface 252, a camera 253, a button 254, a sensor module 260, a universal serial bus (universal serial bus, USB) interface 270, a charging management module 280, a power management module 281, and a battery 282. In some other embodiments, the terminal may further include a motor, an indicator, and the like.

The processor 210 may include one or more processing units. For example, the processor 210 may include an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. It should be noted that different processing units may be independent components, or may be integrated into one or more independent processors, or may be integrated into a same component with another module in the terminal. The modem is used as an example. The modem may be a processing unit independent of the processor 210, or may be integrated into a same device with another processing unit (for example, the AP, the ISP, or the GPU), or some or all functions of the modem and the mobile communication module 231 may be integrated into a same device.

The internal memory 221 may be configured to store data and/or at least one computer program, and the at least one computer program includes instructions. Specifically, the internal memory 221 may include a program storage area and a data storage area. The program storage area may store at least one computer program. The computer program may include an application (for example, Gallery or Contacts), an operating system (for example, an Android operating system or an iOS operating system), another program, or the like. The data storage area may store at least one of data created in a process of using the terminal, data received from another device (for example, another terminal, a network device, or a server), data pre-stored before delivery, or the like. For example, the data stored in the internal memory 221 may be at least one piece of information such as an image, a file, or an identifier.

In some embodiments, the internal memory 221 may include a high-speed random access memory and/or a nonvolatile memory. For example, the internal memory 221 includes one or more magnetic disk storage devices, a flash (Flash) memory device, a universal flash storage (universal flash storage, UFS), and the like.

The processor 210 may invoke the one or more computer programs and/or data stored in the internal memory 221, so that the terminal is enabled to implement one or more functions to meet a user requirement. For example, the processor 210 may invoke the instructions and data that are stored in the internal memory 221, so that the electronic device is enabled to perform a network selection method provided in this embodiment of this application.

The external memory interface 222 may be configured to connect to an external storage card (for example, a micro SD card), to expand a storage capability of the terminal. The external storage card communicates with the processor 210 through the external memory interface 222, to implement a data storage function. For example, files such as images, music, and videos are stored in the external memory card.

In some embodiments, a buffer may be further disposed in the processor 210, and is configured to store instructions and/or data that need/needs to be cyclically used by the processor 210. If the processor 210 needs to use the instructions or the data again, the instructions or the data may be directly invoked from the buffer. This helps avoid repeated access, and reduce waiting time of the processor 210, so that system efficiency is improved. For example, the buffer may be implemented by using a cache.

The antenna A and the antenna B are configured to transmit and receive an electromagnetic wave signal. Each antenna in the terminal may be configured to cover one or more communication frequency bands. Different antennas may be further multiplexed, to improve antenna utilization. For example, the antenna A may be multiplexed as a diversity antenna in a wireless local area network. In some other embodiments, the antenna may be used in combination with a tuning switch.

The mobile communication module 231 may be configured to implement communication between the terminal and the network device based on a mobile communication technology (for example, 2G, 3G, 4G, or 5G) supported by the terminal. For example, the mobile communication technology supported by the terminal may include at least one of GSM, GPRS, CDMA, WCDMA, TD-SCDMA, LTE, NR, or the like. For example, the terminal supports GSM. After the terminal accesses a network through a cell provided by a BTS in a GSM communication system, and when a network signal strength of the accessed cell is not lower than a decision threshold, that is, when the terminal is in a network camping state, communication between the terminal and the BTS is implemented by using the mobile communication module 231. For example, the mobile communication module 231 may amplify a signal modulated by the modem, and then send an amplified signal to the network device through the antenna A. Alternatively, the mobile communication module 231 may receive, through the antenna A, a signal sent by the network device, amplify the signal, and then send an amplified signal to the modem. The modem demodulates the received signal into a low-frequency baseband signal, and then performs other corresponding processing. In some embodiments, the mobile communication module 231 may include a filter, a switch, a power amplifier, a low noise amplifier (low noise amplifier, LNA), and the like.

The wireless communication module 232 may provide a solution for wireless communication that is applied to the terminal and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), or an infrared (infrared, IR) technology, or the like. The GNSS may include at least one of a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), a satellite based augmentation system (satellite based augmentation systems, SBAS), and/or the like. For example, the wireless communication module 232 may be one or more components integrated into at least one communication processor module. The wireless communication module 232 may communicate with a corresponding device through the antenna B based on a wireless communication technology (for example, Wi-Fi, Bluetooth, FM, or NFC) supported by the wireless communication module 232.

The terminal may implement an audio function, for example, music playing and recording, by using the audio module 240, the speaker 240A, the receiver 240B, the microphone 240C, the headset jack 240D, the AP, and the like.

The terminal may implement a display function by using the GPU, the display 251, the AP, and the like. The display 251 may be configured to display an image, a video, and the like. The display 251 may include a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the terminal may include one or N displays 251, where N is a positive integer greater than 1.

The button 254 may include a power button, a volume button, and the like. The button 254 may be a mechanical button, or may be a virtual button, a virtual option, or the like. The terminal may receive a button input to generate a button signal input related to user setting and function control of the terminal. For example, in response to selecting a virtual option used to indicate to start a "Power consumption optimization mode", the terminal may collect statistics on or collect some information about a cell on which the terminal camps in a period of time, to provide a more personalized service for a user, so as to improve user experience.

The sensor module 260 may include one or more sensors. For example, the sensor module 260 includes an acceleration sensor 260A, a touch sensor 260B, a fingerprint sensor 260C, and the like. In some embodiments, the sensor module 260 may further include a pressure sensor, a gyroscope sensor, an environment sensor, a distance sensor, an optical proximity sensor, a bone conduction sensor, and the like.

The acceleration sensor (acceleration sensor, ACC sensor) 260A may collect a magnitude of an acceleration of the terminal in each direction (usually, on three axes). When the terminal is still, the acceleration sensor 260A may detect a value and a direction of gravity. In addition, the acceleration sensor 260A may further be configured to recognize a posture of the terminal, and is applied in applications such as a pedometer or screen switching between a landscape mode and a portrait mode. In some embodiments, the acceleration sensor 260A may be connected to the processor 210 by using a micro control unit (micro controller unit, MCU), to help reduce power consumption of the terminal. For example, the acceleration sensor 260A may be connected to the AP and the modem by using the MCU. In some embodiments, the MCU may be a general intelligent sensor hub (Sensor hub).

The touch sensor 260B may also be referred to as a "touch panel". The touch sensor 260B may be disposed on the display 251, and the touch sensor 260B and the display 251 form a touchscreen, which is also referred to as a "touch screen". The touch sensor 260B is configured to detect a touch operation performed on or near the touch sensor 260B. The touch sensor 260B may transfer the detected touch operation to the AP, to determine a type of a touch event. Then, the terminal provides, by using the display 251 based on the determined type of the touch event, a visual output related to the touch operation. In some other embodiments, the touch sensor 260B may be alternatively disposed on a surface of the terminal, and is located at a location different from that of the display 251.

The fingerprint sensor 260C is configured to collect a fingerprint. The terminal may implement fingerprint unlocking, application lock access, fingerprint photographing, fingerprint-based call answering, and the like by using a collected fingerprint feature.

In some other embodiments, the processor 210 may further include one or more interfaces. For example, the interface may be the SIM card interface 252. For another example, the interface may be alternatively the USB interface 270. For still another example, the interface may be alternatively an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), or a general-purpose input/output (general-purpose input/output, GPIO) interface. It may be understood that the processor 210 in this embodiment of this application may connect to different modules of the terminal through interfaces, so that the terminal can implement different functions, for example, network searching and photographing. It should be noted that a connection manner of the interface in the terminal is not limited in this embodiment of this application.

The SIM card interface 252 is configured to connect to a SIM card. The SIM card may be inserted into the SIM card interface 252 or plugged from the SIM card interface 252, to implement contact with or separation from the terminal. The terminal may support one or N SIM card interfaces, where N is a positive integer greater than 1. The SIM card interface 252 may support a nano-SIM card, a micro-SIM card, a SIM card, and the like. A plurality of cards may be inserted into a same SIM card interface 252. The plurality of cards may be of a same type or different types. The SIM card interface 252 may be compatible with different types of SIM cards. In some embodiments, the SIM card interface 252 is also compatible with an external storage card. The terminal implements functions such as calling and data communication through the SIM card. In some embodiments, the terminal may use an eSIM, namely, an embedded SIM card. The eSIM card may be embedded in the terminal, and cannot be separated from the terminal.

The USB interface 270 is an interface that conforms to a USB standard specification, and may be specifically a mini USB interface, a micro USB interface, a USB Type C interface, or the like. The USB interface 270 may be configured to connect to a charger to charge the terminal, may be configured to transmit data between the terminal and a peripheral device, or may be configured to connect to a headset for playing audio through the headset. The interface may be further configured to connect to another electronic device such as an AR device.

It may be understood that an interface connection relationship between the modules illustrated in this embodiment of the present invention is only an example for description, and does not constitute a limitation on the structure of the terminal. In some other embodiments of this application, the terminal may alternatively use an interface connection mode different from that in the foregoing embodiments, or use a combination of a plurality of interface connection modes.

The charging management module 280 is configured to receive a charging input from a charger. The charger may be a wireless charger or a wired charger. The power management module 281 is configured to connect to the battery 282 and the charging management module 280 to the processor 210. The power management module 281 receives an input from the battery 282 and/or the charging management module 280, and supplies power to modules such as the processor 210. In some embodiments, the power management module 281 may be further configured to monitor parameters such as a battery capacity, a quantity of times of battery cycle, and a battery health status (electric leakage or impedance).

It should be understood that the structure of the terminal shown in FIG. 1B is only an example. The terminal in this embodiment of this application may have more or fewer components than those shown in FIG. 1B, may combine two or more components, or may have different component configurations. Components shown in the figure may be implemented by hardware, software, or a combination of hardware and software that includes one or more signal processing and/or application-specific integrated circuits.

For example, the processor 210 may include a network selection main control unit, configured to perform the network selection method provided in this embodiment of this application. For example, a connection relationship between the AP, the network selection main control unit, the modem, and the sensor in this embodiment of this application may be shown in FIG. 1C. A system architecture shown in FIG. 1C may be compatible with an existing baseband network search architecture of a terminal device.

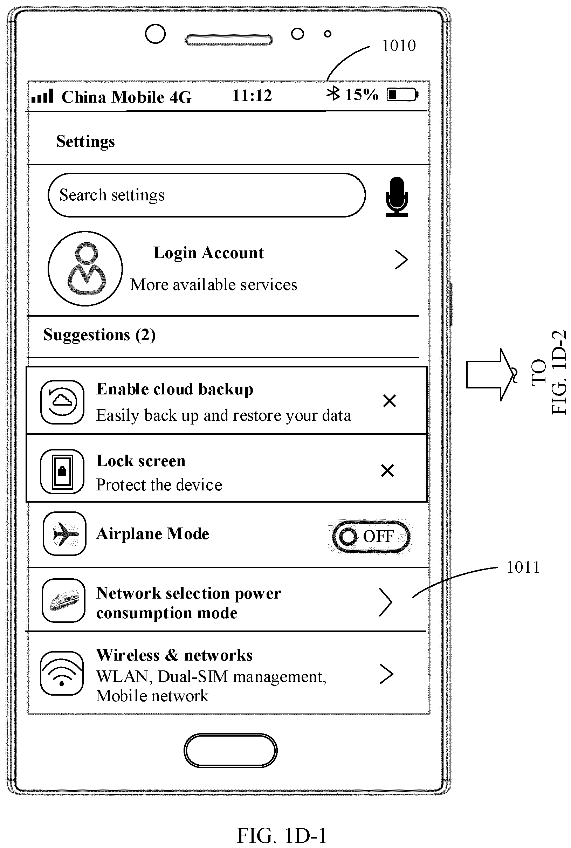

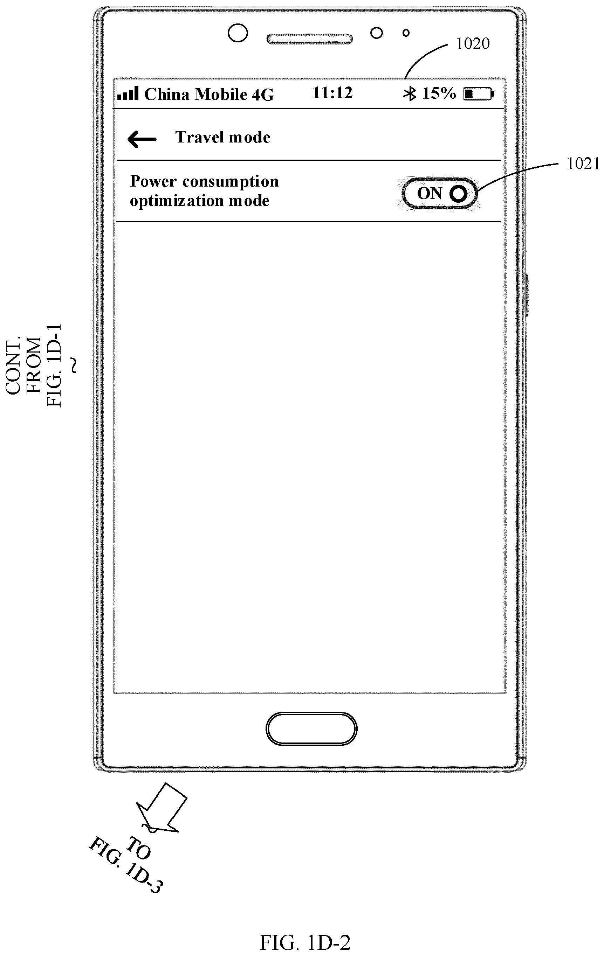

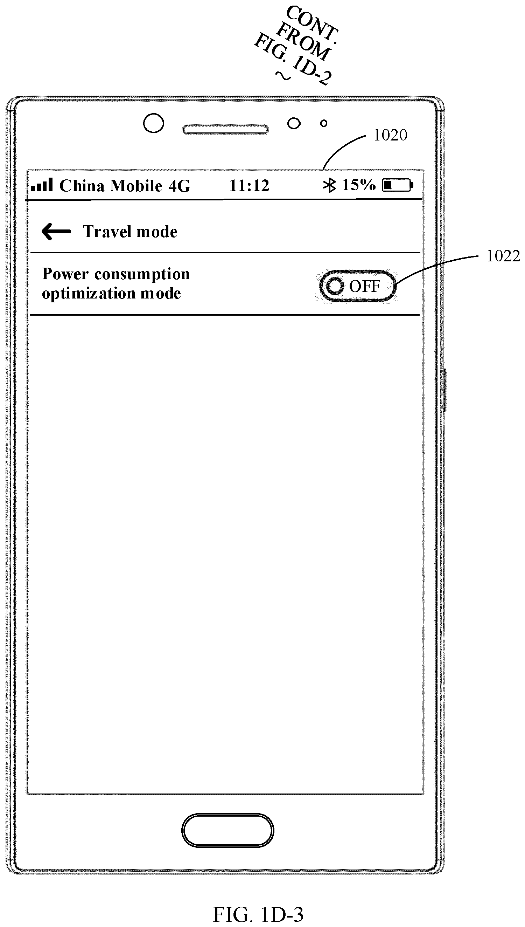

It should be understood that FIG. 1C shows modules or units of a network architecture applicable to an embodiment of this application, but these modules or units are merely examples. This embodiment of this application may further include other parts or variations of parts in FIG. 1C. Alternatively, not all modules or units in FIG. 1 need to be included.

For example, in some embodiments, the modem may further include a first buffer, and the sensor may further include a second buffer, to help improve processing efficiency of the modem and the sensor. For example, the first buffer may be configured to store cell information collected by the modem, and the second buffer may be configured to store information of a terminal device that is collected by the sensor.

A network selection main control unit 130 is configured to obtain, from a modem 140, a historical record of cell camping of the terminal device, and determine (that is, predict), based on the historical record, a next-hop cell of a cell on which the terminal device currently camps. Compared with the current technology in which the terminal device can use only a signal strength of a neighboring cell as a criterion for determining the next-hop cell, in this embodiment of this application, the terminal device can perform network selection based on the historical record of cell camping of the terminal device, so that the terminal device can perform targeted network search. In this way, power consumption of the terminal device is reduced.

For example, the historical record of cell camping of the terminal device may include cell information of a cell in which the terminal device camps in a first time period. The first time period is a time period before a current moment. In a specific example, the cell information of the cell on which the terminal device camps in the first time period may include cell information of a cell on which the terminal device historically camps and time information corresponding to the cell information. The time information corresponding to the cell information indicates time in which the terminal device camps on the cell corresponding to the cell information. The time information corresponding to the cell information may include a time stamp at which the terminal device starts to camp on the cell corresponding to the cell information, and/or a time stamp at which the terminal device stops camping on the cell corresponding to the cell information.

Herein, a length of the first time period is not limited. For example, the first time period may be seven days, five days, one day, 10 hours, two hours, or the like, and all fall within the protection scope of this embodiment of this application.

In some embodiments, the network selection main control unit 130 may include a power consumption optimization mode and a normal working mode. In the power consumption optimization mode, the network selection main control unit 130 performs network selection based on the historical record of cell camping of the terminal device, to optimize the power consumption of the terminal device. In the normal working mode, the network selection main control unit 130 does not work. To be specific, the modem 140 may perform network selection in an existing manner, that is, use only the signal strength of the neighboring cell as the criterion for determining the next-hop cell.

As an implementation, an AP 110 may send configuration information to the network selection main control unit 130. The configuration information is used to enable the power consumption optimization mode of the network selection main control unit 130. The network selection main control unit 130 may determine, based on configuration of the AP 110, whether to enable the power consumption optimization mode. For example, the AP 110 may configure a working mode of the network selection main control unit 130 by using a control command (command, CMD).

In a specific example, the AP may configure the working mode through an Android (Android) setting menu. As shown in FIG. 1D-1 to FIG. 1D-3, a system setting interface 1010 includes a virtual option 1011, and the terminal may display a user interface 1020 on the display 251 in response to an operation of selecting the virtual option by a user. The user interface 1020 includes a virtual button 1021. The terminal may enable a function of the power consumption optimization mode in response to an operation performed by the user on the virtual button 1021. In addition, the user interface 1020 may alternatively include a virtual button 1022. The terminal may disable a function of the power consumption optimization mode in response to an operation performed by the user on the virtual button 1022, that is, enable a function of the normal working mode.

In some embodiments, the modem 140 may obtain cell information of a cell on which the terminal device camps and a time stamp corresponding to the cell information, and send the cell information and the time stamp corresponding to the cell information to the network selection main control unit 130.

As an implementation, the modem 140 may periodically send the cell information and the time stamp to the network selection main control unit 130. As another implementation, the modem 140 may send the cell information and the time stamp to the network selection main control unit 130 in real time. As another implementation, the network selection main control unit 130 may request, from the modem 140, a history record of cell camping of the terminal device within a preset time period. In response to the request of the network selection main control unit 130, the modem 140 may send cell information of a cell on which the terminal device camps in the preset time period and a time stamp to the network selection main control unit 130.

Correspondingly, the network main control unit 130 may receive and store the cell information and the time stamp, for example, store the cell information and the time stamp in a cache. In this way, the network selection main control unit 130 may learn of a cell on which the terminal device currently camps and the history record of cell camping of the terminal device.

In this embodiment of this application, the cell information may include a cell identifier of the cell on which the terminal device camps. Optionally, the cell information may further include at least one of a cell identifier of a neighboring cell of the cell on which the terminal device camps, and a signal strength, a frequency channel number, and a standard of the terminal device in the camped cell. This is not limited in this embodiment of this application.

For example, the signal strength may be a received signal strength indicator (received signal strength indication, RSSI), reference signal received quality (reference signal receiving power, RSRP), reference signal received quality (reference signal receiving quality, RSRQ), or the like. This is not limited in this embodiment of this application.

Optionally, a sensor 120 may obtain sensor information, and send the obtained sensor information to the network selection main control unit 130, to assist the network selection main control unit 130 in performing network selection. In some embodiments, the sensor may further obtain a time stamp corresponding to the sensor information. Specifically, for the sensor and the sensor information, refer to the foregoing descriptions. For brevity, details are not described herein again.

As an implementation, the sensor 120 may periodically send the sensor information and the time stamp to the network selection main control unit 130. As another implementation, the modem 140 may send the sensor information and the time stamp to the network selection main control unit 130 in real time. As another implementation, the network selection main control unit 130 may request the sensor information of the terminal device from the modem 140 within the preset time period. In response to the request of the network selection main control unit 130, the modem 140 may send the sensor information of the terminal device within the preset time period and the time stamp to the network selection main control unit 130.

After determining the next-hop cell of the cell on which the terminal device currently camps, the network selection main control unit 130 may send the next-hop cell to the modem 140. The modem 140 may perform targeted network search based on the next-hop cell, for example, measure only the next-hop cell, to reduce the power consumption of the terminal device.

In some embodiments, the modem 140 may further feed back an execution result of a policy to the network selection main control unit 130, so that the network selection main control unit 130 can further optimize the network selection policy based on the execution result of the policy.

Therefore, in this embodiment of this application, the terminal device can determine the next-hop cell of the current camped cell based on the history record of cell camping of the terminal device. Compared with the current technology in which the terminal device can use only a signal strength of a neighboring cell as a criterion for determining the next-hop cell, in this embodiment of this application, the terminal device can perform network selection based on the historical record of cell camping of the terminal device, so that the terminal device can perform targeted network search. In this way, the power consumption of the terminal device is reduced.

Still refer to FIG. 1C. The network selection main control unit 130 may include an environment awareness unit 1310 and a policy interaction unit 1320. Further, the environment awareness unit 1310 may include a collection module 1311 and a route and scenario identification module 1312, and the policy interaction unit 1320 may include a learning module 1321 and a policy matching module 1322. The following describes in detail a network selection method in an embodiment of this application with reference to the network architecture shown in FIG. 1C.

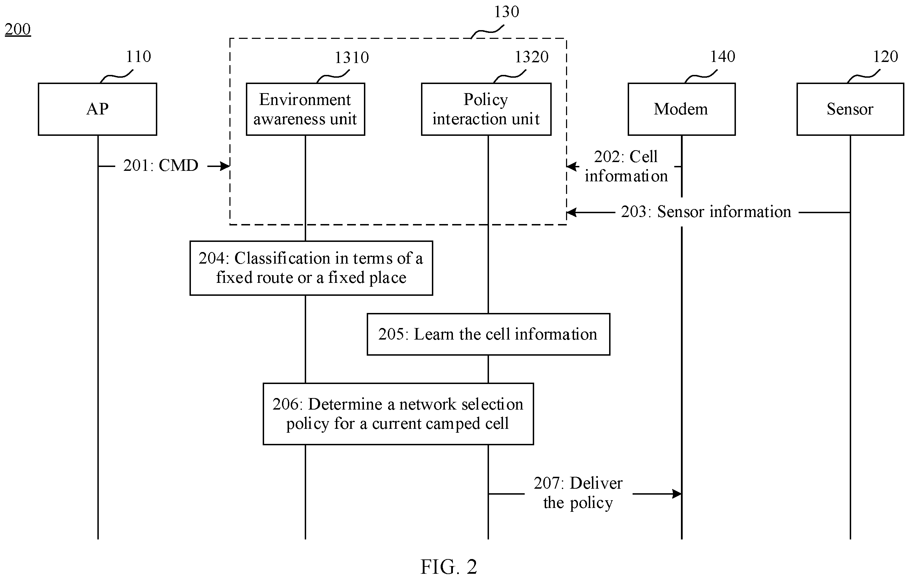

FIG. 2 is a schematic flowchart of a network selection method 200 according to an embodiment of this application. The method 200 may be performed by the terminal device in FIG. 1C. In FIG. 2, a reference numeral the same as a reference numeral in FIG. 1C indicates a same or similar meaning. For brevity, details are not described herein again. Specifically, the method 200 may include step 201 to step 207.

Optionally, in 201, the AP 110 sends a CMD to the network selection main control unit 130 to instruct the network main control unit 130 to enable a power consumption optimization mode.

202: The modem 140 sends cell information of a cell on which the terminal device camps within a first time period to the network selection main control unit 130. Correspondingly, the collection module 1311 in the environment awareness unit 1310 may obtain the cell information of the cell on which the terminal device camps within the first time period. For the cell information, refer to the foregoing descriptions. For brevity, details are not described herein again.

Optionally, in 203, the sensor 120 sends sensor information of the terminal device within the first time period to the network selection main control unit 130. Correspondingly, the collection module 1311 in the environment awareness unit 1310 may obtain the sensor information within the first time period. For the sensor information, refer to the foregoing descriptions. For brevity, details are not described herein again.

A sequence of steps 201, 202, and 203 is not limited in this embodiment of this application. For example, step 201 may be performed before step 202 or 203, or may be performed after step 202 or 203. All these fall within the protection scope of this embodiment of this application. In addition, in this embodiment of this application, step 201 or 203 may not need to be performed. However, this is not limited in this embodiment of this application.

204: The environment awareness unit 1310 performs classification in terms of a fixed route or a fixed place.

Specifically, the environment awareness unit 1310 may identify and extract, from the cell information obtained in step 202, cell information (that is, first cell information) of a cell on which the terminal device camps on a fixed route, or identify and extract cell information (that is, second cell information) of a cell on which the terminal device camps in a fixed place. That is, the environment awareness unit 1310 may perform route identification or scenario identification, and extract cell information in different scenarios.

As an example, the route and scenario identification module 1312 in the environment awareness unit 1310 may classify, based on information obtained by the collection module 1311, the cell information obtained in step 202 in terms of a fixed route or a fixed place, that is, identify and extract cell information on a fixed route scenario in the cell information obtained by the collecting module 1311, or identify and extract cell information in a fixed place scenario in the cell information obtained by the collecting module 1311.

For example, the fixed place may be a place where the user often stays in a fixed manner, for example, home, a school, or a company. In the fixed place, the terminal device may camp on one or more cells within a range of the fixed place.

For example, the fixed route may be a route commonly used by the user during travel, for example, may be a route from home to the school or a route from home to the company. This is not limited in this embodiment of this application. On the fixed route, the terminal device sequentially camps on some fixed cells.

In some embodiments, a scenario in which the terminal device is located may be identified based on information about time when the terminal device camps on a cell corresponding to the cell information, an identifier of Wi-Fi connected when the terminal device camps on the cell corresponding to the cell information, sensor information, or other information. This is not limited in this embodiment of this application.

In an example, whether a cell is a cell on a fixed route or a cell in a fixed place may be distinguished based on a time period in which the terminal device camps on the cell. The time period may be preset in the terminal device. However, this embodiment of this application is not limited thereto.

For example, because the user is usually at home from 12 p.m. to 6 a.m. on a workday, a cell on which the terminal device camps from 12 p.m. to 6 a.m. on the workday may be determined as a cell in a fixed place. That is, in the time period from 12 p.m. to 6 a.m. on the workday, the terminal device is in a fixed place scenario. In addition, because the user is usually located in the company from 9:00 a.m. to 5:00 p.m. on the workday, a cell on which the terminal device camps from 9:00 a.m. to 5:00 p.m. on the workday may be further determined as a cell in a fixed place. That is, in the time period from 12:00 p.m. to 6:00 a.m. on the workday, the terminal device is in a fixed place scenario.

For another example, the user usually goes to the company from home from 7:00 a.m. to 9:00 a.m. on the workday, and goes home from the company from 5:00 p.m. to 7:00 p.m. on the workday. Therefore, cells on which the terminal device camps from 7:00 a.m. to 9:00 a.m. and from 5:00 p.m. to 7:00 p.m. on the workday may each be determined as a cell on a fixed route. That is, in the time periods from 7:00 a.m. to 9:00 a.m. and 5:00 p.m. to 7:00 p.m. on the workday, the terminal devices is in a fixed route scenario.

Because activities of the user on the workday are regular, this classification manner of distinguishing cells on the fixed route and in the fixed place based on time periods can reduce complexity of cell classification, and accurately classify the cells.

In another example, whether a cell is a cell on the fixed route or a cell in the fixed place may be distinguished based on an identifier of Wi-Fi connected when the terminal device camps on the cell.

For example, when the terminal device is connected to Wi-Fi at the user's home or company, a cell on which the terminal device camps is a cell in the fixed place. That is, the terminal device is in the fixed place scenario.

For another example, when the terminal device is disconnected from Wi-Fi at the user's home, and is connected to Wi-Fi of the company after a period of time, a cell on which the terminal device camps during this period is a cell on the fixed route. That is, the terminal device is in the fixed route scenario. Alternatively, when the terminal device is disconnected from Wi-Fi in the user company, and is connected to Wi-Fi at home after a period of time, a cell on which the terminal device camps during this period is also a cell on the fixed route. That is, the terminal device is in the fixed route scenario.

In another example, whether a cell is a cell on the fixed route or a cell in the fixed place may be distinguished based on sensor information of the terminal device when the terminal device camps on the cell.

For example, when the sensor information indicates that the terminal device is mostly in a moving state within a time period, a cell on which the terminal device camps within the time period may be a cell on the fixed route. That is, the terminal device is in the fixed route scenario. When the sensor information indicates that the terminal device is mostly in a stationary state within a time period, a cell on which the terminal device camps within the time period may be a cell on the fixed place. That is, the terminal device is in the fixed place scenario.

It may be understood that the foregoing classification methods for distinguishing cells on the fixed route and in the fixed place may be randomly combined. This is not limited in this embodiment of this application.

For example, whether the terminal device is in the fixed place scenario may be determined based on the preset time period, for example, an identifier of Wi-Fi to which the terminal device is connected in the time period from 12 p.m. to 6 a.m. on the workday. For example, when Wi-Fi to which the terminal device is connected within the preset time period is Wi-Fi at home, it may be determined that a cell on which the terminal device camps within the time period is a cell in the fixed place. That is, in the time period, the terminal device is in the fixed place scenario. For another example, when Wi-Fi to which the terminal device is connected within the preset time period is not Wi-Fi at home, it may be determined that a cell on which the terminal device camps within the time period is not a cell in the fixed place. That is, in the time period, the terminal device is not in the fixed place scenario.

205: The policy interaction unit 1320 learns the cell information.

In this embodiment of this application, the policy interaction unit 1320 may separately learn cell information in different scenarios based on the first cell information or the second cell information obtained by the environment awareness unit 1310, to obtain a learning result. A next-hop cell of a current camped cell may be determined based on the learning result. In this embodiment of this application, a first cell may be an example of the current camped cell, and a second cell may be an example of the next-hop cell.

In some embodiments, the learning module 1321 in the policy interaction unit 1320 may learn valid camped cells applicable to the terminal device in different scenarios. For example, the learning module 1321 may preprocess the first cell information or the second cell information according to a preset rule, to obtain a valid camped cell. When the first cell information is preprocessed according to a first preset rule, a first valid camped cell may be obtained. When the second cell information is preprocessed according to a second preset rule, a second valid camped cell may be obtained. The valid camped cell includes the first valid camped cell or the second valid camped cell.

For example, the first preset rule may be to remove, from cells corresponding to the first cell information, cells between which the terminal device performs ping-pong handover. In this embodiment of this application, the cells between which the terminal device performs ping-pong handover may be referred to as ping-pong cells. In a specific embodiment, there may be two or three ping-pong cells. This is not limited in this embodiment of this application.

In this embodiment of this application, there may be one, two, or more second valid camped cells. In some optional embodiments, a quantity of second valid camped cells may be predefined, or the quantity of second valid camped cells may be selected by the user. This is not limited in this embodiment of this application.

For example, when there is one second valid camped cell, the second preset rule may be that the terminal device determines, from cells corresponding to the second cell information, a cell in which the terminal device has longest camping time, lowest power consumption, or a highest signal received strength, and the cell is the second valid camped cell.

When there are at least two second valid camped cells, the second preset rule may be that at least two cells in which the terminal device has longest camping time, lowest power consumption, or highest signal received strengths are determined from cells corresponding to the second cell information, and cells between which the terminal device performs ping-pong handover is determined from the at least two cells.

It should be noted that a basis for selecting the second valid camped cell is described by using only camping duration, power consumption, or a received signal strength of the terminal device in the cell as examples. However, this is not limited in this embodiment of this application. For example, the second valid camped cell may be determined based on at least two types of information of the camping duration, the power consumption, or the received signal strength of the terminal device in the cell. In some possible implementations, it may be preconfigured that the terminal device uses at least one of the camping duration, the power consumption, or the received signal strength of the cell as the basis for selecting the second valid camped cell, or the user selects at least one of the camping duration, the power consumption, or the received signal strength of the terminal device in the cell as the basis for selecting the second valid camped cell. This is not limited in this embodiment of this application.

In some embodiments, operations of step 204 and step 205 may be periodically performed based on the data collected in step 202 or step 203. To be specific, fixed route or fixed location classification is performed on the collected cell information, or further learning is performed on cell information under each category. For example, three days may be used as a cycle, or seven days may be used as a cycle. This is not limited in this embodiment of this application.

In some embodiments, after the terminal device performs step 202 to step 205 once, the terminal device does not perform step 202 to step 205 in a long period of time (for example, one month, three months, or one year). When the user wants to re-obtain the cell information, and re-classify and further learn the cell information, or when the terminal device detects that the user changes a work city, or changes a home or company residence, step 201 to step 205 may be performed again.

206: Determine a network selection policy of the current camped cell.

For example, a network selection policy suitable for the current camped first cell may be determined based on the learning result of the learning module 1321. That is, the next-hop cell of the current camped cell, namely, the second cell, is predicted. The next-hop cell may be a cell with optimal power consumption.

For example, the collection module 1311 may obtain cell information of the first cell on which the terminal device currently camps, and the route and scenario identification module 1312 identifies whether the cell information of the first cell is cell information on the fixed route (that is, whether the terminal device is currently in the fixed route scenario), or whether the cell information of the first cell is cell information in the fixed place (that is, whether the terminal device is currently in the fixed location scenario).

In some possible implementations, a current scenario may be determined based on time information at a current moment, an identifier of Wi-Fi connected at a current moment, or sensor information. For example, when the current moment is 8:00 a.m. on a workday, or when the terminal device is in the moving state, it may be determined that the terminal device is currently in the fixed route scenario, that is, the cell information of the first cell is cell information on the fixed route. For another example, when the current moment is 10:00 p.m., or when the Wi-Fi to which the terminal device is connected at the current moment is Wi-Fi at home or in the company, or when the terminal device is in the stationary state, it may be determined that the terminal device is currently in the fixed place scenario, that is, the cell information of the first cell is cell information in the fixed place.

Then, the policy matching module 1322 may determine, based on an identification result of cell information of a current cell, a network selection policy matching a current scenario. When the terminal device is in the fixed route scenario, that is, when the cell information of the first cell is cell information on the fixed route, the second cell may be determined from the first valid camped cell. When the terminal device in the fixed place scenario, that is, when the cell information of the first cell is cell information in the fixed place, the second cell may be determined in the second valid camped cell.

In a possible implementation, step 204 and/or step 205 may be performed before the cell information of the first cell on which the terminal device currently camps is obtained. This helps quickly predict the next-hop cell of the current camped cell.

In another possible implementation, step 204 and/or step 205 may alternatively be performed after the cell information of the first cell on which the terminal device currently camps is obtained. This is not limited in this embodiment of this application.

207: The policy interaction unit 1320 delivers a policy to the modem 140.

As an example, the policy interaction unit 1320 delivers, to the modem 140, a learning policy that matches the current scenario, that is, the network selection policy obtained in step 206.

Therefore, in this embodiment of this application, cell information of cells on which the terminal device camps may be classified in terms of a fixed route or a fixed place, and different preprocessing can be performed on different categories of cell information according to the preset rule, to obtain different categories of valid camped cells of the terminal device. Then, a network selection policy applicable to the current terminal device is generated based on the valid camped cells in different categories. The network selection policy is used to indicate the next-hop cell of the cell on which the terminal device currently camps, so that the terminal device can perform targeted network search, to help reduce the power consumption of the terminal device.

Further, the network selection main control unit in this embodiment of this application can interact with the AP, the modem, and the sensor to jointly implement a network selection function. A system architecture based on this embodiment of this application can be compatible with an existing network search architecture. Therefore, the system architecture in this embodiment of this application is characterized by low coupling, high cohesion, intelligent processing, and the like, and is further characterized by ease of transplantation and upgrade.

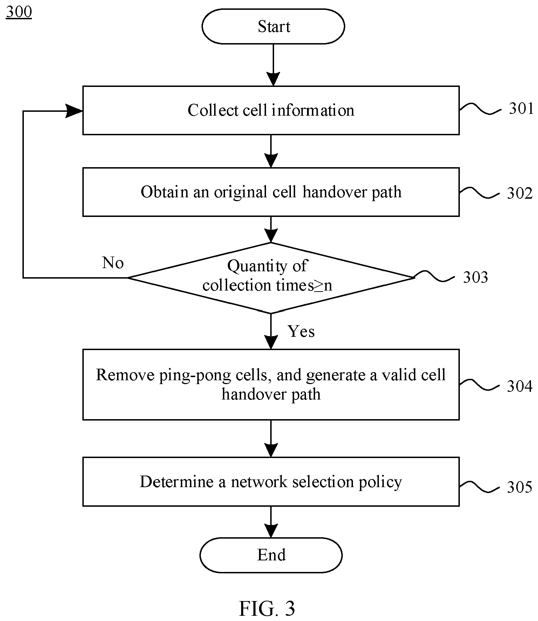

With reference to FIG. 3 to FIG. 15, the following describes the network selection method provided in an embodiment of this application in the fixed route scenario.

FIG. 3 is a schematic flowchart of a network selection method 300 according to an embodiment of this application. For example, the method 300 may be executed by the foregoing network selection main control unit 130. Specifically, the method 300 may include step 301 to step 305.

301: Collect cell information.

For example, the collection module 1311 may perform step 301. For details, refer to the description in step 202 in FIG. 2. Details are not described herein again.

302: Obtain an original cell handover path.

For example, the route and scenario identification module 1312 may obtain the original cell handover path of the terminal device based on the cell information obtained by the collection module 1311, that is, extract cell information of a cell on the original cell handover path from the cell information obtained by the collection module 1311. Herein, the original cell handover path includes cells on which the terminal device sequentially camps in a time sequence on a fixed route. As a specific example, after a period of data collection, a plurality of original cell handover paths, such as A-B-C-D-E, A-B-C-D-C-D-E, A-B-C-B-C-D-E, A-B-F-D-E, and A-B-C-F-D-E, may be obtained on the fixed route from home to a company. A, B, C, D, E, F, and the like identify cells.

In this embodiment of this application, a cell handover path may correspond to a cell identifier list, and the cell identifier list includes at least two cell identifiers that are in a one-to-one correspondence with at least two cells on the cell handover path. In addition, an order of the at least two cell identifiers in the cell identifier list is the same as an order of the at least two cells on the cell handover path.

For example, the original cell handover path may correspond to an original cell identifier list, and the original cell identifier list includes cell identifiers of the cells on which the terminal device sequentially camps in the time sequence on the fixed route.

Optionally, in step 302, the terminal device may further obtain a signal strength, for example, RSRP, of the terminal device in a camped cell before each handover on the cell handover path. This is not limited in this embodiment of this application.

303: Determine whether a quantity of collection times is greater than or equal to m. When the quantity of collection times is less than m, step 301 continues to be performed. When the quantity of collection times is greater than m, step 304 is performed. Herein, m is a positive integer. For example, m may be preset in the collection module 1311.

In this embodiment of this application, the quantity of collection times is set to be greater than or equal to m, so that the collection module 1311 can obtain robust historical cell records, to help improve accuracy of learning a network selection policy in this embodiment of this application.

304: Remove ping-pong cells, and generate a valid cell handover path.

For example, the learning module 1321 may perform step 304. In other words, step 304 may be a specific example of step 205 in FIG. 2 on a fixed route scenario. For example, the first valid camped cell in step 205 includes a cell corresponding to at least one (that is, one or more) valid cell handover route herein.

In this embodiment of this application, when the terminal device performs ping-pong handover (that is, frequent handover) between two cells or three cells, the two cells or the three cells may be referred to as ping-pong cells. For example, when the terminal device is located at boundaries of a plurality of cells, signal strengths of the plurality of cells are equivalent, so that the terminal device may access any cell in a moving process, and ping-pong handover of the terminal device between the plurality of cells may be caused.

In a possible implementation, when a quantity of times that the terminal device is handed over between two cells (or three cells) in a time period is greater than a preset threshold, the two cells (or the three cells) may be considered as ping-pong cells. For example, the time period may be unit time or a preset time period. This is not limited in this embodiment of this application.

In some optional embodiments, when the cell handover path includes ping-pong cells, the ping-pong cells on the cell handover path may be removed, to obtain the valid cell handover path. When the network selection policy is determined based on the valid cell handover path, it can be ensured that the terminal device stably camps on a next-hop cell indicated by the network selection policy.

Continuing with the example in step 304, a ping-pong removing operation is performed on a plurality of original cell handover paths on the fixed route from home to the company. In this case, three valid cell handover paths: A-B-C-D-E, A-B-F-D-E, and A-B-C-F-D-E on the fixed route from home to the company may be finally obtained.

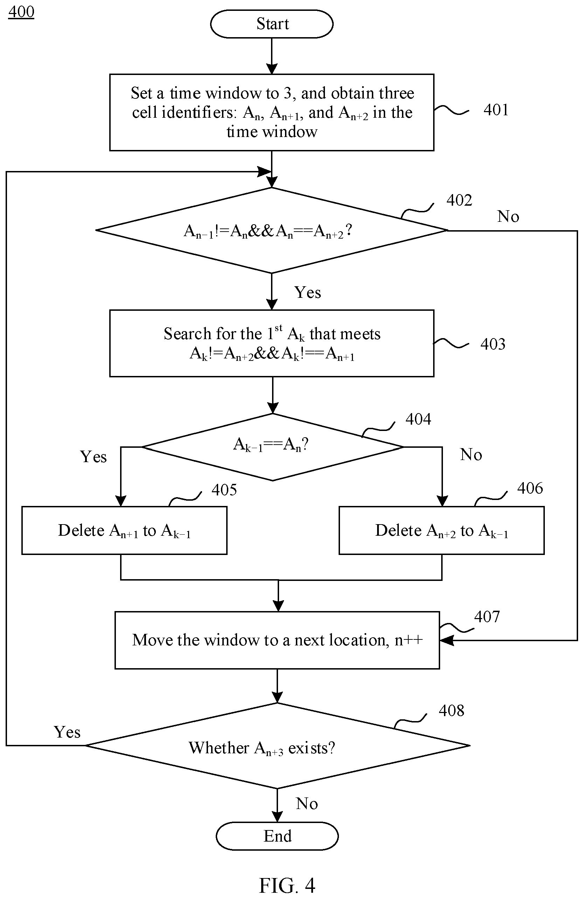

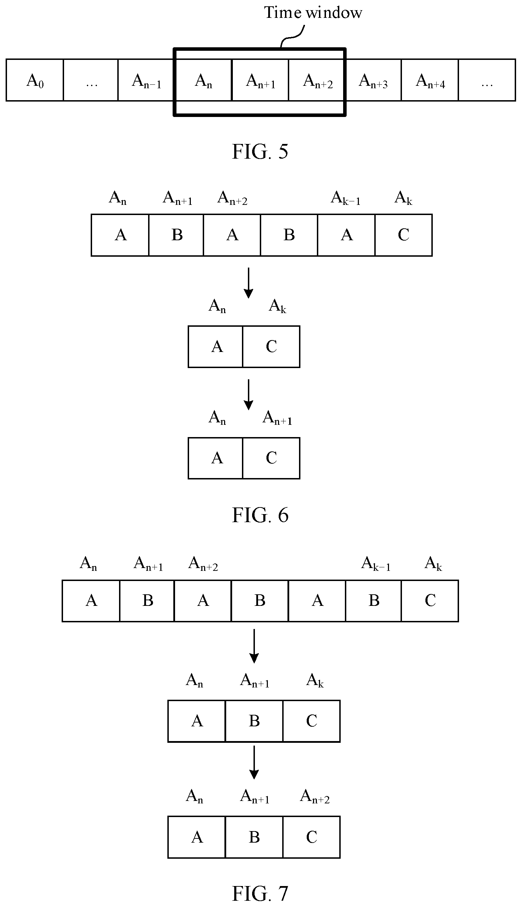

For example, the ping-pong cells on the cell handover path may be removed based on the cell identifier list corresponding to the cell handover path. The following describes two ping-pong cell removing methods according to an embodiment of this application with reference to FIG. 4 and FIG. 5.

FIG. 4 shows a schematic flowchart of a method 400 for removing two cells that are ping-pong cells.

401: Set a time window to 3, and obtain three cell identifiers: $A_n$, $A_{n+1}$, and $A_{n+2}$ in the time window.

FIG. 5 shows an example of a cell identifier list and a time window. As shown in FIG. 5, the cell identifier list may include a plurality of cell identifiers such as $A_0$, ..., $A_{n-1}$, $A_n$, $A_{n+1}$, $A_{n+2}$, $A_{n+3}$, $A_{n+4}$, ..., and n is a positive integer. For example, the time window may be set from n=1 until all ping-pong cells in the cell identifier list are removed. In an example, when n=1, three cell identifiers included in the time window are $A_1$, $A_2$, and $A_3$.

402: Determine whether a condition $A_{n-1} != A_n \&\& A_n == A_{n+2}$ is met.

To be specific, it is determined whether the cell identifier $A_{n-1}$ that is in the cell identifier list and previously adjacent to the time window is the same as the 1st cell identifier $A_n$ in the time window, and it is determined whether the 1st cell identifier $A_n$ in the time window is the same as the 3rd (that is, the last) cell identifier $A_{n+2}$ in the time window.

When the foregoing condition is met, that is, when $A_{n-1}$ is different from $A_n$, and $A_n$ is the same as $A_{n+2}$, 403 is performed next. When the foregoing condition is not met, that is, when $A_{n-1}$ is the same as $A_n$, and/or $A_n$ is different

from $A_{n+2}$, 407 is performed next.

403: Search for the $1^{st}$ $A_k$ that meets $A_k!=A_{n+2}\&\&A_k!=A_{n+1}$, where k> n+2.

Specifically, the $1^{st}$ $A_k$ that is not equal to $A_{n+2}$ and not equal to $A_{n+1}$ is searched for after the time window in the cell identifier list.

404: Determine whether a condition $A_{k-1}==A_n$ is met.

To be specific, it is determined whether $A_{k-1}$ previously adjacent to $A_k$ is the same as the $1^{st}$ cell identifier in the time window.

When the foregoing condition is met, that is, $A_{k-1}$ is the same as $A_n$, 405 is performed next. When the foregoing condition is not met, that is, $A_{k-1}$ is different from $A_n$, 406 is performed next.

405: Delete $A_{n+1}$ to $A_{k-1}$.

FIG. 6 shows a specific example of deletion in a cell identifier list. As shown in the $1^{st}$ line in FIG. 6, $A_n$ to $A_k$ are A, B, A, B, A, and C in sequence. $A_{k-1}$ is A and $A_n$ is A. That is, $A_{k-1}$ is the same as $A_n$. In this case, cell identifiers from $A_{n+1}$ to $A_{k-1}$ are deleted (that is, ping-pong cells B, A, B, and A are deleted). A cell identifier list (that is, a cell identifier list including only A and C) shown in the $2^{nd}$ line in FIG. 6 may be obtained. In this case, the cell identifiers $A_{n+1}$ to $A_{k-1}$ have been deleted. That is, the $2^{nd}$ cell identifier to the last ping-pong cell in the time window are deleted.

Then, as shown in the $3^{rd}$ line in FIG. 6, $A_k$ may be used as the $(n+1)^{th}$ cell identifier in the cell identifier list, $A_{k+1}$ may be used as the $(n+2)^{th}$ cell identifier in the cell identifier list, and so on.

It should be noted that, in this embodiment of this application, A, B, C, D, and the like are examples of specific cell identifiers. However, this embodiment of this application is not limited thereto.

406: Delete $A_{n+2}$ to $A_{k-1}$.

FIG. 7 shows another specific example of deletion in a cell identifier list. As shown in the $1^{st}$ line in FIG. 7, $A_n$ to $A_k$ are A, B, A, B, A, B, and C in sequence. $A_{k-1}$ is B and $A_n$ is A. That is, $A_{k-1}$ is different from $A_n$. In this case, cell identifiers from $A_{n+2}$ to $A_{k-1}$ are deleted (that is, ping-pong cells A, B, A, and B are deleted). A cell identifier list (that is, a cell identifier list including only A, B, and C) shown in the $2^{nd}$ line in FIG. 7 may be obtained. In this case, the cell identifiers $A_{n+2}$ to $A_{k-1}$ have been deleted. That is, the $3^{rd}$ cell identifier to the last ping-pong cell in the time window are deleted.

Then, as shown in the $3^{rd}$ line in FIG. 7, $A_k$ may be used as the $(n+2)^{th}$ cell identifier in the cell identifier list, $A_{k+1}$ may be used as the $(n+3)^{th}$ cell identifier in the cell identifier list, and so on.

407: Move the window to a next location, and increase a value of n by 1, that is, n++.

408: Determine whether $A_{n+3}$ exists.

When $A_{n+3}$ exists, 402 is performed again. When $A_{n+3}$ does not exist, the procedure ends.

After the procedure in FIG. 4 ends, a cell handover path that does not include two cells that are ping-pong cells can be obtained.

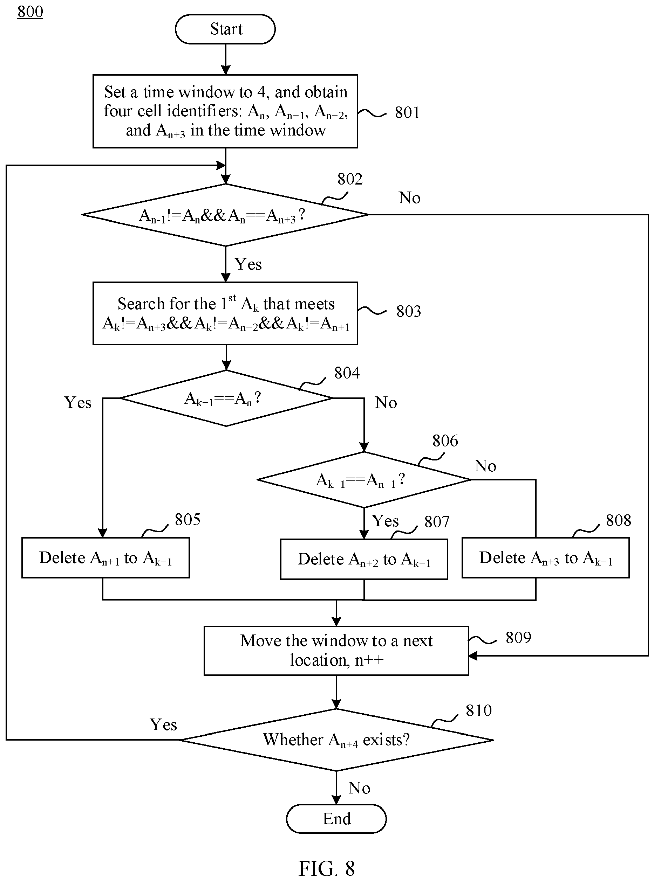

FIG. 8 is a schematic flowchart of a method 800 for removing three cells that are ping-pong cells.

801: Set a time window to 4, and obtain three cell identifiers: $A_n$, $A_{n+1}$, $A_{n+2}$, and $A_{n+3}$ in the time window.

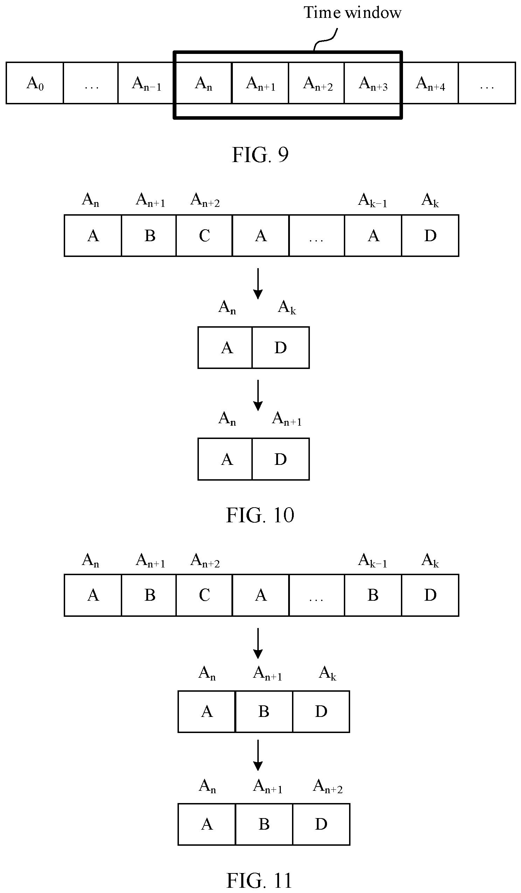

FIG. 9 shows another example of a cell identifier list and a time window. For a cell identifier list in FIG. 9, refer to descriptions in FIG. 5. Details are not described herein again. In an example, when n= 1, three cell identifiers included in the time window are $A_1$, $A_2$, $A_3$, and $A_4$.

802: Determine whether a condition: $A_{n-1}!=A_n\&\&A_n==A_{n+3}$ is met.

To be specific, it is determined whether a cell identifier $A_{n-1}$ that is in the cell identifier list and previously adjacent to the time window is the same as the $1^{st}$ cell identifier $A_n$ in the time window, and it is determined whether the $1^{st}$ cell identifier $A_n$ in the time window is the same as the $4^{th}$ (that is, the last) cell identifier $A_{n+3}$ in the time window.

When the foregoing condition is met, that is, when $A_{n-1}$ is different from $A_n$, and $A_n$ is the same as $A_{n+3}$, 803 is performed next. When the foregoing condition is not met, that is, when $A_{n-1}$ is the same as $A_n$, and/or $A_n$ is different from $A_{n+3}$, 809 is performed next.

803: Search for the $1^{st}$ $A_k$ that meets $A_k!=A_{n+3}\&\&A_k!=A_{n+2}\&\&A_k!=A_{n+1}$, where k> n+3.

Specifically, the $1^{st}$ $A_k$ that meets the condition in 403 is searched for after the time window in the cell identifier list.

804: Determine whether a condition $A_{k-1}==A_n$ is met.

To be specific, it is determined whether $A_{k-1}$ previously adjacent to $A_k$ is the same as the $1^{st}$ cell identifier in the time window.

When the foregoing condition is met, that is, $A_{k-1}$ is the same as $A_n$, 805 is performed next. When the foregoing condition is not met, that is, $A_{k-1}$ is different from $A_n$, 806 is performed next.

805: Delete $A_{n+1}$ to $A_{k-1}$.

FIG. 10 shows a specific example of deletion in a cell identifier list. As shown in the $1^{st}$ line in FIG. 6, $A_n$ to $A_k$ are A, B, C, A, ..., A, and D in sequence. $A_{k-1}$ is A and $A_n$ is A. That is, $A_{k-1}$ is the same as $A_n$. In this case, cell identifiers from $A_{n+1}$ to $A_{k-1}$ are deleted (that is, ping-pong cells B, C, A, ..., and A are deleted). A cell identifier list (that is, a cell identifier list including only A and D) shown in the $2^{nd}$ line in FIG. 10 may be obtained. In this case, the cell identifiers $A_{n+1}$ to $A_{k-1}$ have been deleted. That is, the $2^{nd}$ cell identifier to the last ping-pong cell in the time window are deleted.

Then, as shown in the 3$^{rd}$ line in FIG. 10, $A_k$ may be used as the $(n+1)^{th}$ cell identifier in the cell identifier list, $A_{k+1}$ may be used as the $(n+2)^{th}$ cell identifier in the cell identifier list, and so on.

It should be noted that, in this embodiment of this application, A, B, C, D, and the like are examples of specific cell identifiers. However, this embodiment of this application is not limited thereto.

806: Determine whether a condition $A_{k-1}==A_{n+1}$ is met.

To be specific, it is determined whether $A_{k-1}$ previously adjacent to $A_k$ is the same as the 2$^{nd}$ cell identifier in the time window.

When the foregoing condition is met, that is, $A_{k-1}$ is the same as $A_{n+1}$, 807 is performed next. When the foregoing condition is not met, that is, $A_{k-1}$ is different from $A_{n+2}$, 808 is performed next.

807: Delete $A_{n+2}$ to $A_{k-1}$.

FIG. 11 shows yet another specific example of deletion in a cell identifier list. As shown in the 1$^{st}$ line in FIG. 11, $A_n$ to $A_k$ are A, B, C, A, ..., B, and D in sequence. $A_{k-1}$ is B and $A_{n+1}$ is B. That is, $A_{k-1}$ is the same as $A_{n+1}$. In this case, cell identifiers from $A_{n+2}$ to $A_{k-1}$ are deleted (that is, ping-pong cells C, A, ..., and B are deleted). A cell identifier list (that is, a cell identifier list including only A, B, and D) shown in the 2$^{nd}$ line in FIG. 11 may be obtained. In this case, the cell identifiers $A_{n+2}$ to $A_{k-1}$ have been deleted. That is, the 3$^{rd}$ cell identifier to the last ping-pong cell in the time window are deleted.

Then, as shown in the 3$^{rd}$ line in FIG. 11, $A_k$ may be used as the $(n+2)^{th}$ cell identifier in the cell identifier list, $A_{k+1}$ may be used as the $(n+3)^{th}$ cell identifier in the cell identifier list, and so on.

808: Delete $A_{n+3}$ to $A_{k-1}$.

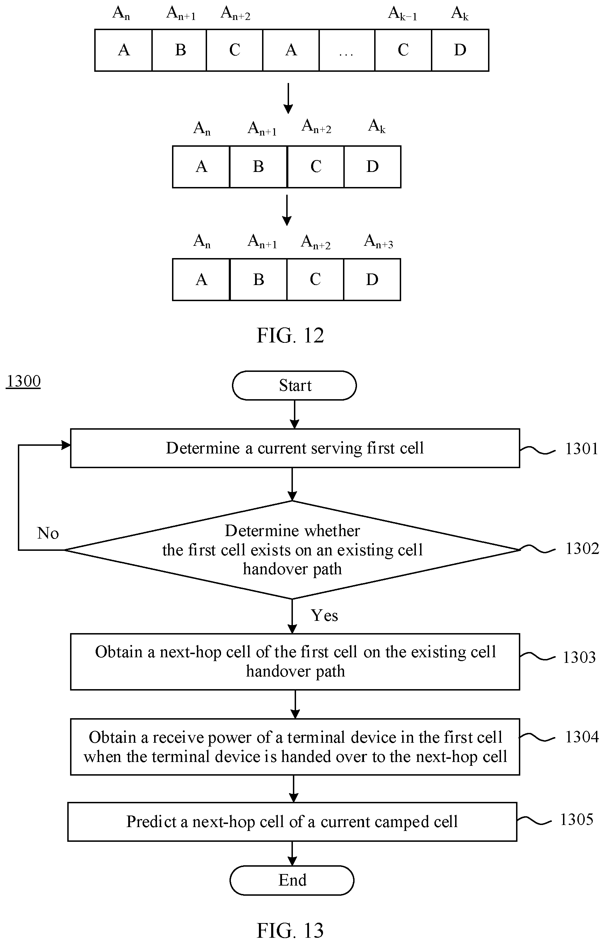

FIG. 12 shows still yet another specific example of deletion in a cell identifier list. As shown in the 1$^{st}$ line in FIG. 12, $A_n$ to $A_k$ are A, B, C, A, ..., C, and D in sequence. $A_{k-1}$ is C and $A_{n+1}$ is B. That is, $A_{k-1}$ is different from $A_{n+1}$. In this case, cell identifiers from $A_{n+3}$ to $A_{k-1}$ are deleted (that is, ping-pong cells A, ..., and C are deleted). A cell identifier list (that is, a cell identifier list including only A, B, C, and D) shown in the 2$^{nd}$ line in FIG. 12 may be obtained. In this case, the cell identifiers $A_{n+3}$ to $A_{k-1}$ have been deleted. That is, the 4$^{th}$ cell identifier to the last ping-pong cell in the time window are deleted.

Then, as shown in the 3$^{rd}$ line in FIG. 12, $A_k$ may be used as the $(n+3)^{th}$ cell identifier in the cell identifier list, $A_{k+1}$ may be used as the $(n+4)^{th}$ cell identifier in the cell identifier list, and so on.

809: Move the window to a next location, and increase a value of n by 1, that is, n++.

810: Determine whether $A_{n+4}$ exists after the window.

When $A_{n+4}$ exists, 802 is performed again. When $A_{n+4}$ does not exist, the procedure ends.

After the procedure in FIG. 8 ends, a cell handover path that does not include three cells that are ping-pong cells can be obtained.

In some possible implementations, when ping-pong cells are removed from the original cell handover path, two cells that are ping-pong cells may be first removed. Then, three cells that are ping-pong cells may continue to be removed from the cell handover path from which the two cells that are ping-pong cells are removed.

305: Determine a network selection policy for a current camped cell.

For example, the policy matching module 1322 may determine, based on the valid cell handover path obtained in 304, the network selection policy suitable for the cell on which the terminal currently camps, that is, predict a next-hop cell of the current camped cell. Herein, step 305 may be a specific example of step 206 in FIG. 2 on a fixed route.

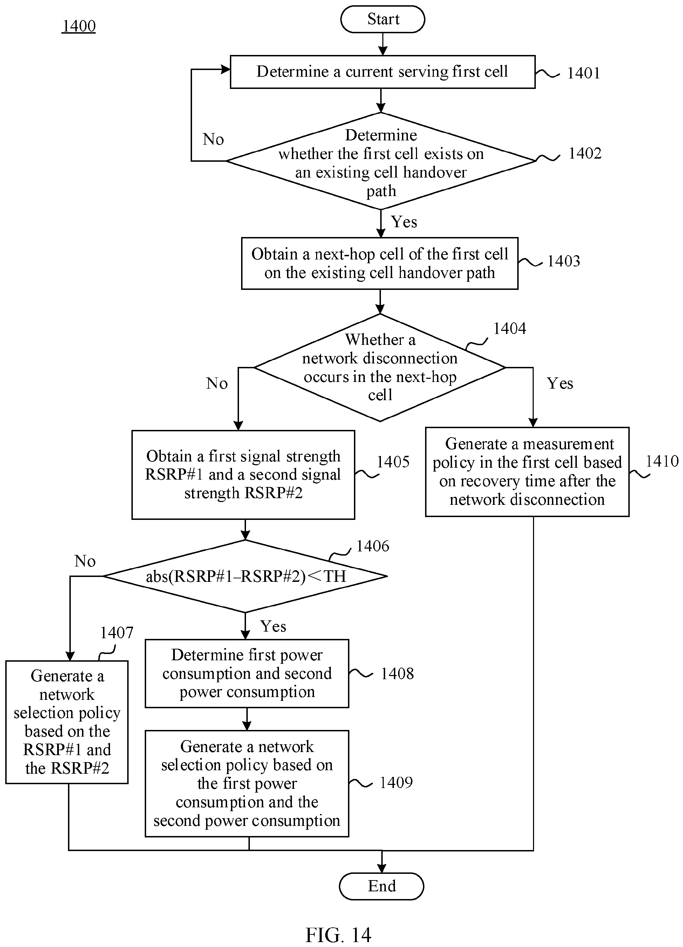

The following separately describes two specific implementations of step 305 with reference to FIG. 13 and FIG. 14.

FIG. 13 is a schematic flowchart of a network selection method 1300 according to an embodiment of this application. As shown in FIG. 13, the method 1300 may include step 1301 to step 1305. For example, step 1301 may be performed by the environment awareness unit 1310, and steps 1302 to 1305 may be performed by the policy interaction unit 1320.

1301: Determine a current serving first cell.

For example, the collection unit 1311 may obtain cell information of the current serving first cell, for example, obtain cell information that is sent by the modem 140 in real time. The route and scenario identification module 1312 determines the current serving first cell based on the cell information of the first cell, and determines that the terminal device is currently on a fixed route scenario, that is, the cell information of the first cell is cell information on the fixed route.

1302: Determine whether the first cell exists on an existing cell handover path.

In an example, the existing cell handover path may be the valid cell handover path obtained in step 304.

In an implementation, the policy matching module 1322 may search, based on a cell identifier of the first cell, for the cell identifier of the first cell in a cell identifier list corresponding to the existing cell handover path. When the cell identifier of the first cell exists in the cell identifier list, it is determined that the first cell exists on the cell handover path corresponding to the cell identifier list. When the cell identifier of the first cell does not exist in the cell identifier list, it is determined that the first cell does not exist on the cell handover path corresponding to the cell identifier list.

When the first cell exists on the cell handover path, 1303 is performed next. When the first cell does not exist on the cell handover path, 1301 is performed again.

1303: Obtain a next-hop cell of the first cell from the existing cell handover path.

In an implementation, the policy matching module 1322 may use, as the next-hop cell of the first cell, a cell corresponding to a next cell identifier that is in the cell identifier list corresponding to the cell handover path and adjacent to the cell identifier of the first cell.

In some embodiments, when next-hop cells of the first cell exist on a plurality of cell handover paths, appearance frequency of next-hop cells on different cell handover paths may be counted, and at least two next-hop cells with highest appearance frequency are determined, for example, top N (top N) cells with the highest appearance frequency.

For example, existing valid cell handover paths are A-B-C-D-E, A-B-F-D-E, and A-B-C-F-D-E, and the current camped cell is the cell B. It is assumed that appearance frequency of A-B-C-D-E is 7, appearance frequency of A-B-C-F-D-E is 8, appearance frequency of A-B-F-D-E is 5, the current cell B exists on the existing cell handover path, frequency of the cell C (which may be referred to as a second cell) serving as a next-hop cell of the cell B is (7+8), and frequency of the cell F (which may be referred to as a third cell) serving as a next-hop cell of the cell B is 5. It may be determined that the cells C and F are first two cells, that is, top 2 cells, with the highest frequency.

Optionally, in 1304, at least one signal received power of the terminal device when the terminal device is handed over to a next-hop cell for at least one time is obtained. The signal received power is a receive power (that is, a signal strength of the terminal device in the first cell) of a signal of the first cell of the terminal device. For example, the received power may be an RSRP. However, this embodiment of this application is not limited thereto.

In an example, the terminal device may obtain, from the signal strength that is of the terminal device in the camped cell before each handover and obtained in step 302 in FIG. 3, the receive power of the signal of the first cell when the terminal device is handed over from the first cell to the next-hop cell.

In some embodiments, when the existing cell handover path includes a plurality of cell handover paths, and the first cell has a same next-hop cell on the plurality of cell handover paths, for example, all the next-hop cells of the first cells are second cells, a plurality of corresponding signal received powers in the first cell when the terminal device is handed over from the first cell to the second cell for a plurality of times are separately obtained.

For example, in one of the cell handover paths, when the terminal device is handed over from the first cell to the second cell, the signal received power in the first cell is -85 dBm. In another cell handover path, when the terminal device is handed over from the first cell to the second cell, the signal received power in the first cell is -90 dBm. In another cell handover path, when the terminal device is handed over from the first cell to the second cell, the signal received power in the first cell is -100 dBm.

In some embodiments, when the existing cell handover path includes a plurality of cell handover paths, and next-hop cells that are of the first cell and that are on the plurality of cell handover paths are different, a plurality of corresponding signal received powers in the first cell when the terminal device is handed over from the first cell to each next-hop cell for a plurality of times are separately obtained.

For example, in one of the cell handover paths, when the terminal device is handed over from the first cell to the second cell, the signal received power in the first cell is -85 dBm. In another cell handover path, when the terminal device is handed over from the first cell to the third cell, the signal received power in the first cell is -75 dBm.

1305: Predict the next-hop cell of the current camped cell.

For example, the policy matching module 1322 may use the next-hop cell obtained by the terminal device in step 1303 as a next-hop cell that is of the first cell and selected by the terminal device after a current moment. For example, a cell (for example, the second cell) with highest handover frequency may be used as the next-hop cell of the current camped cell, or the next-hop cell of the current camped cell may be determined from the top n cells (for example, top 2 (top 2) cells, namely, the second cell and the third cell) with the highest handover frequency.

When it is predicted that the next-hop cell of the current camped cell is the first n cells with the highest handover frequency, the terminal device may perform cell measurement only on the first n cells, and may further use signal strengths of the first n cells as a criterion for determining the next-hop cell.

Therefore, in this embodiment of this application, a cell handover path of the terminal device on the fixed route is obtained, and when the current camped first cell exists on the cell handover path, the next-hop cell of the terminal device in the first cell is predicted based on the next-hop cell that is of the first cell and that is on the cell handover path, so that the terminal device can perform targeted network search based on the predicted next-hop cell, to help reduce a quantity of neighboring cells measured by the terminal device or a quantity of times of cell reselection, so as to help reduce power consumption of the terminal device.

In some optional embodiments, when step 1304 is performed, a cell measurement threshold of the terminal device in the first cell after the current moment may be further determined based on the receive power obtained in step 1304. Specifically, the cell measurement threshold includes a measurement start threshold and/or a leaving threshold. The measurement start threshold is a threshold for starting cell measurement on the next-hop cell, and the leaving threshold is a threshold for restoring default cell measurement, for example, a threshold for performing cell measurement on all neighboring cells.

In an example, when a plurality of corresponding signal received powers in the first cell when handover from the first cell to the second cell is performed for a plurality of times are obtained, a measurement start threshold for the second cell may be determined based on a largest signal received power in the plurality of signal received powers, and/or the leaving threshold may be determined based on a smallest signal received power in the plurality of signal received powers.

In an implementation, the measurement start threshold may be the largest signal received power, and the leaving threshold is the smallest signal received power. For example, when handover from the first cell to the second cell is performed for three times, and three corresponding signal received powers are -85 dBm, -90 dBm, and -100 dBm, -85 dBm may be used as the measurement start threshold for the second cell, and -100 dBm may be used as the leaving threshold. To be specific, when the signal received power of the terminal device in the first cell is less than or equal to -85 dBm, the terminal device starts to perform cell measurement on the second cell. When the signal received power of the terminal device in the first cell is less than or equal to -100 dBm, the terminal device restores default measurement configuration of the modem (that is, the terminal device measures all the neighboring cells of the first cell). In other words, in this case, only a signal strength of the neighboring cell of the first cell may be used as a criterion for determining the next-hop cell. In this case, the measurement start threshold may also be referred to as a measurement start threshold in the first cell for the second cell, and the leaving threshold may also be referred to as a leaving threshold in the first cell for the second cell.

In another example, when a plurality of corresponding signal received powers in the first cell when handover from the first cell to a plurality of next-hop cells is performed for a plurality of times are obtained, the measurement start threshold may be determined based on a largest signal received power in the plurality of signal received powers, and/or the leaving threshold may be determined based on a smallest signal received power in the plurality of signal received powers. In this case, when the measurement start threshold is met, cell measurement may be performed on all predicted cells.

In an implementation, the measurement start threshold may be the largest signal received power, and the leaving threshold is the smallest signal received power. For example, when two signal received powers corresponding to handover from the first cell to the second cell is performed are -85 dBm and -100 dBm, and a signal received power corresponding to handover from the first cell to the third cell is performed is -75 dBm, -75 dBm may be used as a measurement start threshold for any cell (for example, the second cell and the third cell) that may be predicted, and -100 dBm may be used as the leaving threshold. To be specific, when the signal received power of the terminal device in the first cell is less than or equal to -75 dBm, the terminal device starts to perform cell measurement on any cell that may be predicted. When the signal received power of the terminal device in the first cell is less than or equal to -100 dBm, the terminal device restores default measurement configuration of the modem (that is, the terminal device measures all the neighboring cells of the first cell). In other words, in this case, only a signal strength of the neighboring cell of the first cell may be used as a criterion for determining the next-hop cell. In this case, the measurement start threshold may also be referred to as a common measurement start threshold in the first cell, and the leaving threshold may also be referred to as a common leaving threshold in the first cell.

Therefore, in this embodiment of this application, when the signal received power in the first cell is greater than the measurement start threshold (in this case, it may be considered that a signal of the terminal device in the first cell is good), the terminal device does not perform measurement on a specific neighboring cell (for example, the second cell) or all predicted neighboring cells (for example, the second cell and the third cell). Only when the signal received power in the first cell is less than or equal to the measurement start threshold (in this case, it may be considered that the signal of the terminal device in the first cell is poor), the terminal device performs measurement on the specific neighboring cell (for example, the second cell) or all the predicted neighboring cells (for example, the second cell and the third cell). This helps reduce a waste of measurement performed by the terminal device, and reduce the power consumption of the terminal device.

In addition, in this embodiment of this application, when the signal received power in the first cell is less than or equal to the leaving threshold (in this case, it may be considered that quality of the signal of the terminal device in the first cell is already very poor), the terminal device performs cell measurement based on an existing neighboring cell measurement mechanism, instead of performing measurement on only the predicted cell (for example, the second cell), so that a probability that the terminal device obtains the neighboring cell through measurement is increased.

It should be noted that the measurement start threshold set in this embodiment of this application is higher, that is, stricter, than that in the current technology. For example, when a measurement threshold configured by a network device is -80 dBm, the measurement start threshold determined in the solution in this embodiment of this application may be -70 dBm, so that the terminal device can perform cell measurement when signal quality is not very poor. This helps reduce a quantity of times of measuring neighboring cells by the terminal device.

In another implementation, the measurement start threshold may alternatively be obtained by offsetting the largest signal received power, for example, is a sum of the largest signal received power and δ1. In addition, the leaving threshold may alternatively be obtained by offsetting the smallest signal received power, for example, a sum of the smallest signal received power and δ2. Herein, δ1 or δ2 may be a positive value or a negative value. This is not limited in this embodiment of this application.

As an example, for the measurement start threshold, when an offset (that is, δ1) of the largest signal received power is a positive value, because the largest signal received power is usually a negative value, the configured measurement start threshold is increased (that is, the measurement start threshold is increased). In this way, late cell handover can be implemented, to help reduce measurement power consumption. When the offset (that is, δ1) of the largest signal received power is a negative value, because the largest signal received power is usually a negative value, the configured measurement start threshold is decreased (that is, the measurement start threshold is decreased). In this way, early cell handover can be implemented, to help reduce the measurement power consumption.

Similarly, for the leaving threshold, when an offset (that is, δ2) of the smallest signal received power is a positive value, the configured leaving threshold is decreased. This can help restore the default measurement configuration of the modem later, and help save the measurement power consumption. When the offset (that is, δ2) of the smallest signal received power is a negative value, the configured leaving threshold is decreased. This can help restore the default measurement configuration of the modem earlier, and help avoid handover performed when the signal quality is poor.

In some optional embodiments, when step 1304 is not performed, the measurement start threshold or the leaving threshold may be preconfigured. This is not limited in this embodiment of this application.

Therefore, in this embodiment of this application, the receive power of the terminal device in the first cell when the terminal device is handed over to the next-hop cell on the cell handover path is obtained, and the measurement start threshold and/or the leaving threshold for performing cell measurement by the terminal device in the first cell are/is determined based on the receive power, so that the terminal device can perform cell measurement based on the measurement start threshold and/or the leaving threshold, to help reduce the quantity of neighboring cells measured by the terminal device, a quantity of times of measuring neighboring cells, or the quantity of times of cell reselection, so as to help reduce the power consumption of the terminal device.

FIG. 14 is a schematic flowchart of another network selection method 1400 according to an embodiment of this application. As shown in FIG. 14, the method 1400 may include steps 1401 to 1410. For example, step 1401 may be performed by the environment awareness unit 1310, and steps 1402 to 1410 may be performed by the policy interaction unit 1320.

1401: Determine a current serving first cell.

1402: Determine whether the first cell exists on an existing cell handover path.

1403: Obtain a next-hop cell of the first cell from the existing cell handover path.

Specifically, for steps 1401 to 1403, refer to descriptions of steps 1301 to 1303 in FIG. 13. For brevity, details are not described herein again.

1404: Determine whether a network disconnection occurs in the next-hop cell.

Herein, it is determined whether the terminal device is disconnected, on the existing path before a current moment, from a network in the next-hop cell of the first cell. For example, the current moment may be denoted as a first moment.

When no network disconnection occurs in the next-hop cell, step 1405 is performed next. When the network disconnection occurs in the next-hop cell, step 1410 is performed next.

1405: Obtain a first signal strength and a second signal strength.

For example, the next-hop cell includes a second cell and a third cell. A signal strength (which may be denoted as the first signal strength) in the second cell on which the terminal device camps and a signal strength (which may be denoted as the second signal strength) in the third cell on which the terminal device camps may be obtained.

In an example, the signal strength may be an average signal strength in cells on which the terminal device camp. In a specific example, the first signal strength may be an average signal strength of RSRPs in the second cell, and is denoted as an RSRP#1, and the second signal strength may be an average signal strength of RSRPs in the third cell, and is denoted as an RSRP#2.

1406: Determine whether an absolute value of a difference between the first signal strength and the second signal strength is less than a third preset value. As an example, it is determined whether abs(RSRP#1-RSRP#2)<TH is met.

When whether the absolute value of the difference between the first signal strength and the second signal strength is less than the third preset value is not met, that is, abs(RSRP#1-RSRP#2)<TH is not met, 1407 is performed next. TH is an example of the third preset value. When whether the absolute value of the difference between the first signal strength and the second signal strength is less than the third preset value is met, that is, abs(RSRP#1-RSRP#2)<TH is met, 1408 is performed next.

1407: Generate a network selection policy based on the first signal strength RSRP#1 and the second average signal RSRP#2.

For example, a cell corresponding to a greater signal strength in the first signal strength and the second signal strength may be used as a next-hop cell of the terminal device after the first moment. That is, a cell corresponding to max(RSRP#1, RSRP#2) is used as the next-hop cell of the terminal device after the first moment.

That is, when the absolute value of the difference between the first signal strength RSRP#1 and the second average signal RSRP#2 is less than or equal to the threshold TH, it indicates that the difference between the first signal strength RSRP#1 and the second average signal RSRP#2 is large. In this case, the cell corresponding to the greater signal strength in the first signal strength RSRP#1 and the second average signal RSRP#2 may be selected as the next-hop cell after the first moment.

When the absolute value of the difference between the first signal strength RSRP#1 and the second average signal RSRP#2 is greater than the threshold TH, it indicates that the difference between the first signal strength RSRP#1 and the second average signal RSRP#2 is small. In this case, a cell with optimal power consumption is further selected as the next-hop cell after the first moment based on another network configuration parameter. For details, refer to the descriptions in step 1408.

1408: Determine first power consumption and second power consumption. The first power consumption may be power consumption of the terminal device in the second cell, and the second power may be power consumption of the terminal device in the third cell.

In a possible implementation, power consumption of the terminal device in a cell may be determined based on a discontinuous reception (discontinuous reception, DRX) cycle and/or invalid radio resource control (radio resource control, RRC) connection duration of the terminal device in the cell. The invalid RRC connection duration may be duration between a moment at which the modem has no data to send and a moment at which RRC release ends. A longer DRX cycle indicates lower power consumption of the terminal device, and longer RRC connection duration indicates lower power consumption of the terminal device.

For example, weighted summation may be performed on the DRX cycle and the RRC connection duration of the terminal device in the cell, and a value obtained by through summation may be used to represent the power consumption of the terminal device in the cell. The following formula (1) shows a specific example of power consumption.

$$S = SD \times \lambda + SR \times \alpha \qquad (1)$$

S represents a power consumption score, SD represents a DRX cycle score, $\lambda$ represents a weighted value of the DRX cycle score, SR represents an invalid RRC connection score, and $\alpha$ represents a weighted value of the invalid RRC connection score. It can be learned from the formula (1) that a larger S value corresponds to lower power consumption of the terminal device.

In an example, a value of $\lambda$ may be 0.6, and a value of $\alpha$ may be 0.4.

It should be noted that different DRX cycles correspond to different scores SD, and different invalid RRC connection durations correspond to different scores SR. At least one DRX cycle threshold and at least one invalid RRC connection duration threshold may be set, and the scores SD corresponding to different DRX cycles and the scores SR corresponding to different invalid RRC connection durations are determined based on the thresholds.

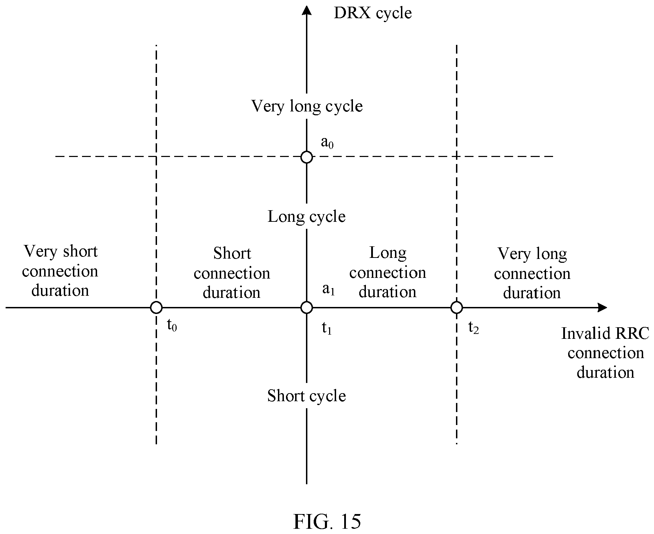

FIG. 15 shows a specific example of a DRX threshold and an invalid RRC connection duration threshold. As shown in FIG. 15, DRX thresholds $a_0$ and $a_1$ may be set, where $a_0 > a_1$. For example, a value of $a_0$ may be sf128, and a value of $a_1$ may be sf10. When a DRX cycle a meets $a \le a_1$, the DRX cycle is a short cycle. When $a_1 < a \le a_0$, the DRX cycle is a long cycle. When $a > a_0$, the DRX cycle is a very long cycle.

As shown in FIG. 15, invalid RRC connection duration thresholds $t_0$, $t_1$, and $t_2$ may be further set, where $t_2 > t_1 > t_0$. As an example, a value of t may be 9s, a value of $t_1$ may be 15s, and a value of $t_2$ may be 20s. When invalid RRC connection duration a meets $t \le t_0$, the invalid RRC connection duration is very short connection duration. When $t_0 < t \le t_1$, the invalid RRC connection duration is short connection duration. When $t_1 < t \le t_2$, the invalid RRC connection duration is long connection duration. When $t_0 < t \le t_1$, the invalid RRC connection duration is very long connection duration.

Table 1 shows examples of the DRX cycle (which may be denoted as a) and a corresponding score SD, and Table 2 shows examples of the invalid RRC connection duration (which may be denoted as t) and a corresponding score SR.

DRX parameter configuration is shown in the following Table 1.

**Table 1**

| DRX cycle a | DRX cycle score (SD) | $\lambda$ | Threshold |
|---|---|---|---|
| $a > a_0$ | 0.55 | 0.6 | $a_0 = $sf128 |
| $a_0 < a \le a_1$ | 0.35 | 0.6 | $a_1 = $sf10 |
| $a \le a_1$ | 0.1 | 0.6 | |

RRC connection parameter configuration is shown in the following Table 2.

**Table 2**

| Invalid RRC connection duration t | Invalid RRC connection score (SR) | $\alpha$ | Threshold |
|---|---|---|---|
| $t \leq t_0$ | 0.55 | 0.4 | $t_0 = 9s$ |
| $t_0 \leq t \leq t_1$ | 0.3 | 0.4 | $t_1 = 15s$ |
| $t_1 < t \leq t_2$ | 0.2 | 0.4 | $t_2 = 20s$ |
| $t > t_2$ | 0.05 | 0.4 | |

1409: Determine a next-hop cell of a current camped cell based on the first power consumption and the second power consumption.

For example, a cell corresponding to lower power consumption in the first power consumption and the second power consumption may be used as the next-hop cell of the terminal device in the current cell. For example, a power consumption score of the terminal device in a cell b may be represented as Sb, and a power consumption score of the terminal device in a cell c may be represented as Sc. In this case, a cell corresponding to max(Sb, Sc) may be used as a next-hop cell selected by the terminal device after a first moment.

It should be noted that the foregoing steps 1405 to 1409 are described by using only an example in which signal strengths of top 2 next-hop cells are obtained. In this embodiment of this application, signal strengths of top 3, top 4, or top N next-hop cells may be further obtained. This is not limited in this embodiment of this application. For a specific implementation of obtaining the signal strengths of the top 3, top 4, or top N cells, refer to related descriptions of obtaining the signal strengths of the top 2 cells. Some simple adaptation may need to be performed, but this also falls within the protection scope of this embodiment of this application.

For example, when signal strengths of top N cells are obtained, it may be determined whether an absolute value of a difference between signal strengths of any two of the N cells is less than a third preset value.

When an absolute value of a difference between signal strengths of at least two of the N cells is not less than the third preset value, the next-hop cell of the current camped cell may be determined based on the signal strengths of the N cells. For example, a cell corresponding to a largest signal strength in the signal strengths of the N cells may be used as the next-hop cell of the current camped cell of the terminal device.

When the absolute value of the difference between the signal strengths of any two of the N cells is less than the third preset value, power consumption of the N cells may be determined, and the next-hop cell of the current camped cell is determined based on the power consumption of the N cells. For example, a cell that is in the N cells and that corresponds to smallest power consumption is used as the next-hop cell of the current camped cell of the terminal device.

Therefore, in this embodiment of this application, it is determined whether the terminal device is disconnected from a network in the next-hop cell before the current moment, and when the terminal device is not disconnected from the network in the next-hop cell, the next-hop cell of the current camped cell is determined based on a signal strength of the terminal device in the next-hop cell. In this way, the terminal device can perform targeted network search, to help reduce a quantity of neighboring cells measured by the terminal device, a quantity of times of measuring the neighboring cells, or a quantity of times of cell reselection, so as to help reduce power consumption of the terminal device.

1410: Generate a measurement policy in a first cell based on recovery time after network disconnection.

For example, when the terminal device is disconnected from a network in a second cell, recovery time after the terminal device is disconnected from the network in the second cell may be obtained. Then, a measurement policy to be used after the terminal device is disconnected from the network in the second cell is determined based on the recovery time.

In an implementation, maximum recovery time (denoted as $T_{max}$) and minimum recovery time (denoted as $T_{min}$) that are in a historical record and that are after the terminal device is disconnected from the network in the second cell may be counted. In this case, timing starts from a moment at which the terminal device is disconnected from the network in the second cell, and a measurement policy at a moment t (that is, a moment at which duration after the terminal device is disconnected from the network in the second cell is t) is as follows.

When $t < T_{min}$, it is determined to disable cell measurement of the terminal device.

In other words, in a time period less than $T_{min}$ after the network disconnection in the second cell, the terminal device disables cell measurement in the first cell. In this case, the terminal device is about to have or has no available network in the time period. In this case, if the terminal device continues to perform cell measurement, it is very likely that the terminal device cannot find a network. Based on this, in this embodiment of this application, cell measurement of the terminal device may be disabled within the time period less than $T_{min}$, to reduce the power consumption of the terminal device.

When $T_{min} \leq t < k \times T_{min} + (1-k)T_{max}$, it is determined to configure a measurement interval of the terminal device as a first measurement interval, where $0 < k < 1$. In an example, a value of k may be 0.5.

In other words, in a time period that is greater than or equal to $T_{min}$ and less than $k \times T_{min} + (1-k)T_{max}$ after the network disconnection in the second cell, the measurement interval of the terminal device is configured as the first measurement interval.

When $t \geq k \times T_{min} + (1-k)T_{max}$, it is determined to configure the measurement interval of the terminal device as a second measurement interval.

In other words, in a time period greater than or equal to $k \times T_{min} + (1-k)T_{max}$ after the network disconnection in the second cell, the measurement interval of the terminal device is configured as the second measurement interval.

The second measurement interval is less than the first measurement interval. In an example, the first measurement interval may be referred to as a long measurement interval, and the second measurement interval may be referred to as a short measurement interval.

In this embodiment of this application, when $T_{min} \leq t \times k \times T_{min} + (1-k)T_{max}$ is met, there is still a low probability that the terminal device recovers the network. In this case, a long measurement interval may be set, so that the terminal device does not need to perform neighboring cell measurement frequently. This helps reduce the power consumption of the terminal device. When $t \geq k \times T_{min} + (1-k)T_{max}$ is met, there is a high probability that the terminal device recovers the network. In this case, a short measurement interval may be set, so that the terminal device can recover the network more quickly.

Therefore, in this embodiment of this application, it is determined whether the terminal device is disconnected from the network in the second cell in the historical record, and when the terminal device is disconnected from the network in the second cell, measurement policies that are applicable to different time periods after the terminal device is currently disconnected from the network in the second cell are generated based on recovery time after the historical network disconnection of the terminal device, so that the terminal device can perform targeted cell measurement. This helps reduce invalid measurement of the terminal device, to help reduce the power consumption of the terminal device.

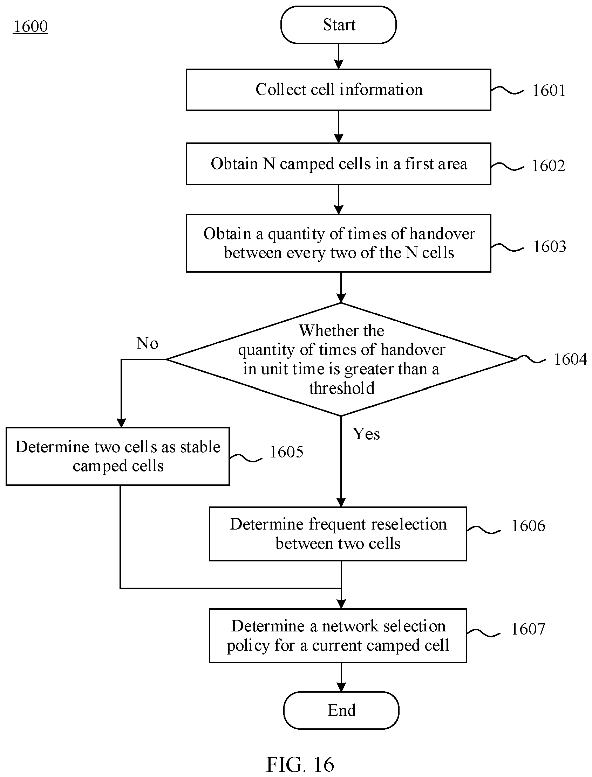

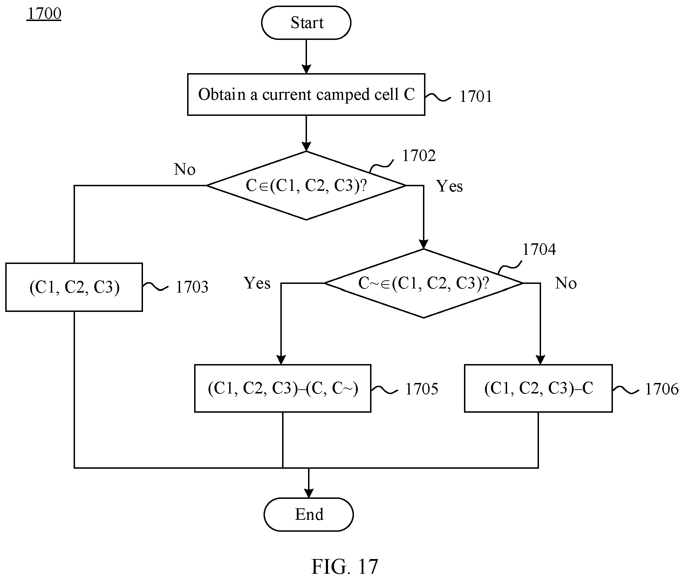

With reference to FIG. 16 and FIG. 17, the following describes a network selection method provided in an embodiment of this application in a fixed place.

FIG. 16 is a schematic flowchart of a network selection method 1600 according to an embodiment of this application. The method 1600 may be performed by the foregoing network selection main control unit 130. Specifically, the method 1600 may include step 1601 to step 1607.

1601: Collect cell information.

For example, the collection module 1311 may perform step 1601. For details, refer to the description in step 202 in FIG. 2. Details are not described herein again.

Optionally, when a quantity of collection times is less than m, step 1601 continues to be performed.

When the quantity of collection times is greater than m, step 1602 is performed. Herein, m is a positive integer. For example, m may be preset in the collection module 1311.

1602: Obtain N cells on which the terminal camps in a first area, where N is a positive integer.

Herein, the first area may be an example of the fixed place, for example, home, a school, or a company. This is not limited in this embodiment of this application.

For example, the route and scenario identification module 1312 may obtain, based on the cell information obtained by the collection module 1311, one or more cells on which the terminal device camps in the first area, that is, extract, from the cell information obtained by the collection module 1311, cell information of one camped cell in the first area.

Then, the N cells may be determined in the one or more cells. N is a positive integer. For example, the learning module 1321 in the policy interaction unit 1320 may determine the N cells. Herein, the N cells may be top N cells on which the terminal device camps in the first area for longest time, or top N cells with lowest power consumption, or top N cells with highest received signal strengths. In an example, when N is 1, the cell is a cell on which the terminal device camps in the first area for the longest time, or a cell with the lowest power consumption or the highest received signal strength. In this case, the cell is an example of a second valid camped cell.

In this way, when a cell on which the terminal device is to camp is determined in the N cells, it can be ensured that the terminal device stably camps on a cell indicated by a network selection policy.

When a value of N is greater than or equal to 2, steps 1603 to 1606 further need to be performed. For example, after obtaining the N cells, the learning module 1321 in the policy interaction unit 1320 may continue to perform the following steps 1603 to 1606. That is, in this case, determining the N cells and the following steps 1603 to 1606 may be a specific example of being in the fixed place in step 205. The N cells are examples of the second valid camped cell.

The following provides description by using an example in which the N camped cells in the first area are three cells, namely, C1, C2, and C3. It should be noted that the N cells may alternatively be two cells, four cells, or more cells. This is not limited in this embodiment of this application. When two, four, or more cells are obtained, for a specific implementation, refer to related descriptions of obtaining the three camped cells in the first area. Some simple adaptation may need to be performed, but this also falls within the protection scope of this embodiment of this application.

1603: Obtain a quantity of times of handover between every two of the N cells.

For example, when the cells C1, C2, and C3 are obtained in step 1602, the learning module 1321 may obtain a quantity of times that the terminal device is handed over between C1 and C2, a quantity of times that the terminal device is handed over between C1 and C3, and a quantity of times that the terminal device is handed over between C2 and C3.

Optionally, the learning module 1321 may further obtain a plurality of corresponding signal received powers, for example, RSRPs, in a current serving cell when the terminal device is handed over between cells for a plurality of times. For example, when the terminal device is handed over from a cell C1 to a cell C2, a signal received power of the terminal device in the cell C1 is obtained, for example, -85 dBm. When the terminal device is handed over from the cell C2 to the cell C3, a signal received power of the terminal device in the cell C2 is obtained, for example, -82 dBm. When the terminal device is handed over from the cell C3 to the cell C2, a signal received power of the terminal device in the cell C3 is obtained, for example, -90 dBm.

1604: Determine whether the quantity of times of handover in unit time is greater than a threshold. For example, the threshold may be preset. When the quantity of times of handover in the unit time is not greater than the threshold, the next step is step 1605. When the quantity of times of handover in the unit time is greater than the threshold, the next step is step 1606.

1605: Determine two cells as stable camped cells.

To be specific, when the quantity of times of handover between the two cells in the unit time is less than or equal to the threshold, it indicates that the terminal device stably camps on the two cells. In other words, the two cells are not ping-pong cells.

1606: Determine frequent reselection between two cells.

To be specific, when the quantity of times of handover between the two cells in the unit time is greater than the threshold, it indicates that the terminal device performs frequent reselection between the two cells. In other words, the two cells are ping-pong cells.

1607: Determine a network selection policy for a current camped cell.

For example, the policy matching module 1322 may determine, based on a learning result in steps 1603 to 1606, the network selection policy suitable for the current camped cell, that is, predict a next-hop cell of the current camped cell. Herein, step 1607 may be a specific example of step 206 in FIG. 2 in a fixed location.

In an example, when one cell on which the terminal device camps in the first area is obtained in step 1602, the cell may be directly used as a next-hop cell of the terminal device for camping on after the first cell.

When at least two cells on which the terminal camps in the first area are obtained in step 1602, the method described in FIG. 17 may be performed to determine the network selection policy for the current camped cell.

FIG. 17 is a schematic flowchart of a network selection method 1700 according to an embodiment of this application. As shown in FIG. 17, the method 1700 may include step 1701 to step 1307. For example, step 1301 may be performed by the environment awareness unit 1310, and steps 1302 to 1305 may be performed by the policy interaction unit 1320 (for example, the policy matching module 1322 in the policy interaction unit).

1701: Determine a current serving first cell C.

For example, the collection unit 1311 may obtain cell information of the current serving first cell, for example, obtain cell information that is sent by the modem 140 in real time. The route and scenario identification module 1312 determines the current serving first cell based on the cell information of the first cell, and determines that the terminal device is currently in a fixed place scenario, that is, the cell information of the first cell is cell information in the fixed place.

1702: Is C□(C1, C2, C3) met?

In an implementation, the policy matching module 1322 may search, based on a cell identifier of the first cell, for the cell identifier of the first cell in a cell identifier list corresponding to an existing cell handover place. Herein, the cell identifier list corresponding to the fixed place is a cell identifier list corresponding to N cells included in the fixed place.

For example, the N cells are C1, C2, and C3, and the cell identifier list is (C1, C2, C3). When the cell identifier list (C1, C2, C3) includes a cell identifier C of the first cell, it is determined that the first cell exists in the fixed place corresponding to the cell identifier list (C1, C2, C3). That is, C□(C1, C2, C3) is met. When the cell identifier C of the first cell does not exist in the cell identifier list (C1, C2, C3), it is determined that the first cell does not exist in the fixed place corresponding to the cell identifier list (C1, C2, C3). That is, C□(C1, C2, C3) is not met.

When C□(C1, C2, C3) is not met, that is, when a cell on which the terminal device currently camps does not belong to (C1, C2, C3), 1703 is performed.

For example, after a user enters an area range of the fixed place, the cell on which the terminal device currently camps is not in top 3 (top 3) cells with highest camping frequency in the fixed place. For example, the cell on which the terminal device currently camps may be a cell near the fixed place, or a cell whose camping frequency is 4 in the fixed place. In this case, 1703 may be performed.

When C□(C1, C2, C3) is met, that is, when the cell on which the terminal device currently camps belongs to (C1, C2, C3), 1704 is performed.

1703: Use at least one cell of C1, C2, and C3 as a cell that can be selected by the terminal device in the first area. In this case, cells that can be selected by the terminal device in the first area may be represented as (C1, C2, C3). In this way, the terminal device can be quickly handed over to one of the top 3 cells, and can stably camp on the cell.

In an implementation, the policy matching module 1322 may recommend, to the terminal device based on a priority sequence of camping duration of the terminal device in C1, C2, and C3, a cell selected in the first area.

Optionally, when the cell C on which the terminal device currently camps does not belong to (C1, C2, C3), because a historical record does not record a signal received power in the cell C when the terminal device is handed over from the cell C to C1, C2, or C3, C1, C2, or C3 may be measured based on a default measurement start threshold. For example, the default measurement start threshold may be a measurement start threshold that is for all cells and set by the modem. Optionally, the terminal device may further perform neighboring cell measurement based on a default leaving threshold. To be specific, when a signal received power of the terminal device in any cell is less than the default leaving threshold, the terminal device performs cell measurement on all neighboring cells.

1704: Is C~□(C1, C2, C3) met?

C~ represents a cell that has a ping-pong relationship with the current camped cell C. That is, in unit time, a quantity of times that the terminal device is handed over between the cell C and the cell C~ to is greater than a preset value.

When C~□(C1, C2, C3) is met, that is, when C1, C2, and C3 include the cell C on which the terminal device currently camps, and also include the cell C~ that has the ping-pong relationship with the cell C, 1705 is performed. When C~□(C1, C2, C3) is not met, that is, when C1, C2, and C3 include the cell C on which the terminal device currently camps, and do not include the cell C~ that has the ping-pong relationship with the cell C, 1706 is performed.

1705: Use (C1, C2, C3)-(C, C~) as the cell that can be selected by the terminal device in the first area. (C1, C2, C3)-(C, C~) represents a cell in C1, C2, and C3 except C, C~. In this way, the terminal device can be handed over to a cell that has no ping-pong relationship with the current camped cell, so that it can be ensured that the terminal device stably camps on a next-hop cell.

Optionally, a measurement policy in the current cell C may be further determined based on a plurality of corresponding signal received powers in the cell C when the terminal device is handed over between cells for a plurality of times. The measurement policy includes a measurement start threshold and/or a leaving threshold of the terminal device in the cell C.

In an implementation, when a plurality of signal received powers existing when the terminal device is handed over from the cell C to (C1, C2, C3)-(C, C~) for a plurality of times are obtained, a largest signal received power in the plurality of signal received powers may be used as the measurement start threshold, and a smallest signal received power in the plurality of signal received powers is used as the leaving threshold. For example, when the cell C is C1 and the cell C~ is C2, a plurality of signal received powers in C1 existing when the terminal device is handed over from C1 to C3 for a plurality of times may be obtained. A largest signal received power in the plurality of signal received powers in C1 is used as a measurement start threshold for the cell C3 in the cell C1 (that is, when a signal received power in the cell C1 is less than the largest received power, measurement is performed on the cell C3), and the smallest signal received power in the plurality of signal received powers in C1 is used as a leaving threshold in the cell C1 (that is, when a signal received power in the cell C1 is less than the smallest signal received power in the cell, measurement is performed on all neighbor cells). In this case, the measurement start threshold may also be referred to as a measurement start threshold corresponding to the cell C2, and the leaving threshold may also be referred to as a leaving threshold corresponding to the cell C2.

1706: Use at least one cell in (C1, C2, C3)-C as cells that can be selected by the terminal device in the first area. (C1, C2, C3)-C represents cells in C1, C2, and C3 except C. In this way, the terminal device can be handed over to a cell that has no ping-pong relationship with the current camped cell, so that it can be ensured that the terminal device stably camps on the next-hop cell.

Optionally, a measurement policy in the current cell C may be further determined based on a plurality of corresponding signal received powers in the cell C when the terminal device is handed over between cells for a plurality of times. The measurement policy includes a measurement start threshold and a leaving threshold of the terminal device in the cell C.

For example, when the cell C is C1, a plurality of signal received powers in C1 existing when the terminal device is handed over from C1 to C2 for a plurality of times may be obtained. A largest signal received power in the plurality of signal received powers in C1 is used as a measurement start threshold for the cell C2 in the cell C1 (that is, when a signal received power in the cell C1 is less than the largest received power, measurement is performed on the cell C2), and the smallest signal received power in the plurality of signal received powers in C1 is used as a leaving threshold in the cell C1 (that is, when a signal received power in the cell C1 is less than the smallest signal received power in the cell, measurement is performed on all neighbor cells). In addition, a plurality of signal received powers in C1 existing when the terminal device is handed over from C1 to C3 for a plurality of times may be obtained. A largest signal received power in the plurality of signal received powers in C1 is used as a measurement start threshold for the cell C3 in the cell C1 (that is, when a signal received power in the cell C1 is less than the largest received power, measurement is performed on the cell C3), and the smallest signal received power in the plurality of signal received powers in C1 is used as a leaving threshold in the cell C1 (that is, when a signal received power in the cell C1 is less than the smallest signal received power in the cell, measurement is performed on all neighbor cells). In this case, measurement start thresholds for different cells in the cell C may be different, or leaving thresholds for different cells in the cell C are different. Therefore, the measurement start threshold herein may be a measurement start threshold for a specific cell, and the leaving threshold herein may be a leaving threshold for the specific cell.

For another example, when a plurality of signal received powers existing when the terminal device is handed over from the cell C to (C1, C2, C3)-(C) for a plurality of times are obtained, a largest signal received power in the plurality of signal received powers may be used as a measurement start threshold, and a smallest signal received power is used as a leaving threshold. For example, when the cell C is C1, a plurality of signal received powers in C1 existing when the terminal device is handed over from C1 to C2 or C3 for a plurality of times may be obtained, a largest signal received power in the plurality of signal received powers in C1 is used as a measurement start threshold for the cell C2 or C3 in the cell C1, and a smallest signal received power in the plurality of signal received powers is used as a leaving threshold in the cell C1. In this case, the measurement start threshold may be a common measurement start threshold in the cell C, and the leaving threshold is a common leaving threshold in the cell C.

Specifically, for the measurement start threshold and the leaving threshold, refer to the foregoing descriptions. For brevity, details are not described herein again.

In some optional embodiments, the measurement start threshold or the leaving threshold may be preconfigured. This is not limited in this embodiment of this application.

Therefore, in this embodiment of this application, a next-hop cell of the terminal device in the first cell is predicted by obtaining a historical record about cell camping of the terminal device in the fixed place and based on a historical camping status of the terminal device in the cell in the fixed place, so that the terminal device can perform targeted network search based on the predicted cell. This helps reduce a quantity of neighboring cells measured by the terminal device, or a quantity of times of measuring neighboring cells, or a quantity of times of cell reselection, to help reduce power consumption of the terminal device.

It should be noted that, in a fixed place scenario, when cells that are in the N cells and between which the terminal device performs ping-pong handover are determined before the first cell on which the terminal device currently camps is determined. In this way, after obtaining the current camped cell, the terminal device more quickly predicts a next-hop cell of the current cell.

Optionally, in this embodiment of this application, in the fixed place scenario, the cells that are in the N cells and between which the terminal device performs ping-pong handover may be determined after the first cell on which the terminal device currently camps is determined. For example, when the current camped first cell is C, and C□(C1, C2, C3), in a process of determining the cells that are in the N cells and between which the terminal device performs ping-pong handover, it may be determined only whether the terminal device performs ping-pong handover on another cell in the first cell C and (C1, C2, C3) except C. To be specific, in this case, whether the terminal device performs ping-pong handover between C2 and C3 does not need to be determined. In this way, resources consumed by calculation of the terminal device can be reduced.

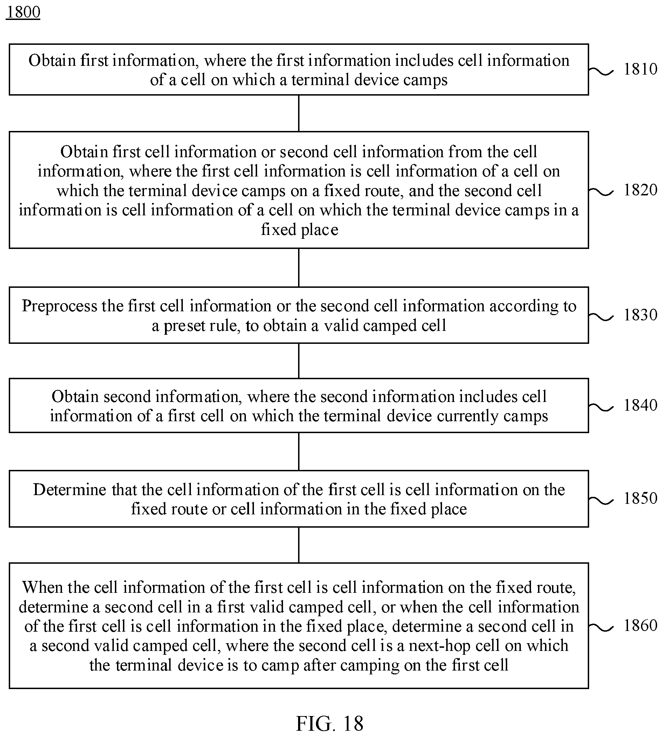

FIG. 18 is a schematic flowchart of a network selection method 1800 according to an embodiment of this application. For example, the method 1800 may be performed by the terminal device shown in FIG. 1A, FIG. 1B, or FIG. 1C. Further, the method 1800 may be performed by the network selection main control unit 130 in the system architecture 100 in FIG. 1C. The method 1800 includes steps 1810 and 1860.

1810: Obtain first information, where the first information includes cell information of a cell on which the terminal device camps.

1820: Obtain first cell information or second cell information from the cell information, where the first cell information is cell information of a cell on which the terminal device camps on a fixed route, and the second cell information is cell information of a cell on which the terminal device camps in a fixed place.

1830: Preprocess the first cell information or the second cell information according to a preset rule, to obtain a valid camped cell, where the valid camped cell includes a first valid camped cell or a second valid camped cell, the first valid camped cell is obtained by preprocessing the first cell information according to a first preset rule, and the second valid camped cell is obtained by preprocessing the second cell information according to a second preset rule.

1840: Obtain second information, where the second information includes cell information of a first cell on which the terminal device currently camps.

1850: Determine that the cell information of the first cell is cell information on the fixed route or cell information in the fixed place.

1860: When the cell information of the first cell is cell information on the fixed route, determine a second cell in the first valid camped cell, or when the cell information of the first cell is cell information in the fixed place, determine a second cell in the second valid camped cell, where the second cell is a next-hop cell on which the terminal device is to camp after camping on the first cell.

Therefore, in this embodiment of this application, cell information of cells on which the terminal device camps may be classified in terms of a fixed route or a fixed place, and different preprocessing can be performed on different categories of cell information according to the preset rule, to obtain different categories of valid camped cells of the terminal device. Then, a network selection policy applicable to the current terminal device is generated based on the valid camped cells in different categories. The network selection policy is used to indicate a next-hop cell of the cell on which the terminal device currently camps, so that the terminal device can perform targeted network search, to help reduce power consumption of the terminal device.

Optionally, the cell information further includes a signal received power of the terminal device in the camped cell when the terminal device is handed over from the camped cell to the next-hop cell.

The method 1800 further includes:

determining, based on the at least one signal received power, a cell measurement threshold of the terminal device in the camped cell.

The cell measurement threshold includes a measurement start threshold and/or a leaving threshold, the measurement start threshold is a threshold for starting cell measurement on the next-hop cell of the camped cell, the leaving threshold is a threshold for performing cell measurement on a neighboring cell of the camped cell, the cell measurement threshold is determined based on a largest signal received power in the at least one signal received power, and the leaving threshold is determined based on a smallest signal received power in the at least one signal received power.

Optionally, when the first cell information is obtained from the cell information, the first valid camped cell includes the first cell and the second cell, and the second cell is a historical next-hop cell that is of the first cell and that is on the fixed route. The method 1800 further includes:

after the terminal device is disconnected from a network in the second cell, when $t < T_{min}$, determining to disable cell measurement of the terminal device;

when $T_{min} \leq t < k \times T_{min} + (1-k)T_{max}$, determining to configure a measurement interval of the terminal device as a first measurement interval, where $0 < k < 1$; and

when $t \geq k \times T_{min} + (1-k)T_{max}$, determining to configure a measurement interval of the terminal device as a second measurement interval, where the second measurement interval is less than the first measurement interval.

Herein, t represents duration after a moment at which the terminal device is disconnected from the network in the second cell, $T_{max}$ represents statistically obtained maximum recovery time for recovering connection after the terminal device is disconnected from the network in the second cell, and $T_{min}$ represents statistically obtained minimum recovery time for recovering connection after the terminal device is disconnected from the network in the second cell.

Optionally, when the first cell information is obtained from the cell information, the first valid camped cell includes the first cell, the second cell, and a third cell, and the second cell and the third cell are two different historical next-hop cells that are of the first cell and that are on the fixed route.

First frequency of the second cell serving as a next-hop node of the terminal device in the first cell is greater than second frequency of the third cell serving as a next-hop node of the terminal device in the first cell; or

a first signal strength of the terminal device in the second cell is greater than a second signal strength of the terminal device in the third cell; or

first power consumption of the terminal device in the second cell is greater than second power consumption of the terminal device in the third cell, where the first power consumption is determined based on a discontinuous reception DRX cycle and invalid radio resource control RRC connection duration of the terminal device in the second cell, and the second power consumption is determined based on a discontinuous reception DRX cycle and invalid radio resource control RRC connection duration of the terminal device in the third cell.

Optionally, the preprocessing the first cell information or the second cell information according to a preset rule, to obtain a valid camped cell includes:

when the first cell information is obtained from the cell information, removing, from cells corresponding to the first cell information, cells between which the terminal device performs ping-pong handover, to obtain the first valid camped cell.

Optionally, the removing, from cells corresponding to the first cell information, cells between which the terminal device performs ping-pong handover, to obtain the first valid camped cell includes:

obtaining a first cell identifier list corresponding to the fixed route, where the first cell identifier list includes at least two cell identifiers that are in a one-to-one correspondence with at least two cells on the fixed route, and an order of the at least two cell identifiers in the first cell identifier list is the same as an order of the at least two cells on the fixed route; and

removing, based on the first cell identifier list, the cells between which the terminal device performs ping-pong handover, to obtain the first valid camped cell.

Optionally, the removing cells from which the terminal device performs ping-pong handover includes:

setting a first time window in the first cell identifier list, where the first time window includes three consecutive cell identifiers in the first cell identifier list;
when a condition that a cell identifier that is in the first cell identifier list and previously adjacent to the first time window is different from the 1st cell identifier in the first time window, and the 1st cell identifier is equal to the last cell identifier in the first time window is met, obtaining a first cell identifier after the first time window in the first cell identifier list, where the first cell identifier is different from the 2nd cell identifier and the last cell identifier in the first time window; and
when a condition that a second cell identifier previously adjacent to the first cell identifier is the same as the 1st cell identifier is met, deleting cell identifiers from the 2nd cell identifier to the second cell identifier from the first cell identifier list; or
when a condition that the second cell identifier is different from the 1st cell identifier is met, deleting cell identifiers from the last cell identifier to the second cell identifier from the first cell identifier list.

Optionally, the removing cells from which the terminal device performs ping-pong handover includes:

setting a second time window in the first cell identifier list, where the second time window includes four consecutive cell identifiers in the first cell identifier list;
when a condition that a cell identifier that is in the first cell identifier list and previously adjacent to the second time window is different from the 1st cell identifier in the second time window, and the 1st cell identifier is equal to the last cell identifier in the second time window is met, obtaining a third cell identifier after the second time window in the first cell identifier list, where the third cell identifier is different from the 2nd cell identifier, the 3rd cell identifier, and the last cell identifier in the first time window; and
when a condition that a fourth cell identifier previously adjacent to the third cell identifier is the same as the 1st cell identifier is met, deleting cell identifiers from the 2nd cell identifier to the fourth cell identifier from the first cell identifier list;
when a condition that the fourth cell identifier is different from the 1st cell identifier, and the fourth cell identifier is the same as the 2nd cell identifier is met, deleting cell identifiers from the 3rd cell identifier to the fourth cell identifier from the first cell identifier list; or
when a condition that the fourth cell identifier is different from the 1st cell identifier, and the fourth cell identifier is different from the 2nd cell identifier is met, deleting cell identifiers from the last cell identifier to the fourth cell identifier from the first cell identifier list.

Optionally, the preprocessing the first cell information or the second cell information according to a preset rule, to obtain a valid camped cell includes:

when the second cell information is obtained from the cell information, determining, from cells corresponding to the second cell information, at least two cells with longest camping duration, lowest power consumption, or highest received signal strengths of the terminal device, to obtain the second valid camped cell, where the second valid camped cell includes the at least two cells; and
determining, from the second valid camped cell, cells between which the terminal device performs ping-pong handover.

Optionally, the determining a second cell from the second valid camped cell includes:

when the first cell does not belong to the at least two cells, using at least one of the at least two cells as the second cell;
when the first cell belongs to the at least two cells, and the terminal device does not perform ping-pong handover between the first cell and another cell of the at least two cells other than the first cell, using at least one of the at least two cells as the second cell;
when the first cell belongs to the at least two cells, and the terminal device performs ping-pong handover between the first cell and a fourth cell of the at least two cells other than the first cell, using another cell of the at least two cells other than the first cell and the fourth cell as the second cell; or
when the first cell belongs to the at least two cells, and the terminal device performs ping-pong handover between the first cell and a fifth cell that does not belong to the at least two cells, using a cell in the at least two cells other than the first cell as the second cell.

Optionally, the first information further includes information about time when the terminal device camps on the cell corresponding to the cell information.

The obtaining first cell information or second cell information from the cell information includes:
determining, based on the time information, that the cell information is the first cell information or the second cell information.

Optionally, the first information further includes an identifier of Wi-Fi to which the terminal device is connected when the terminal device camps on the cell corresponding to the cell information.

The obtaining first cell information or second cell information from the cell information includes:
determining, based on the identifier of the Wi-Fi, that the cell information is the first cell information or the second cell information.

Specifically, steps or procedures of the method 1800 may correspond to corresponding processes in FIG. 2 to FIG. 17. For brevity, details are not described herein again.

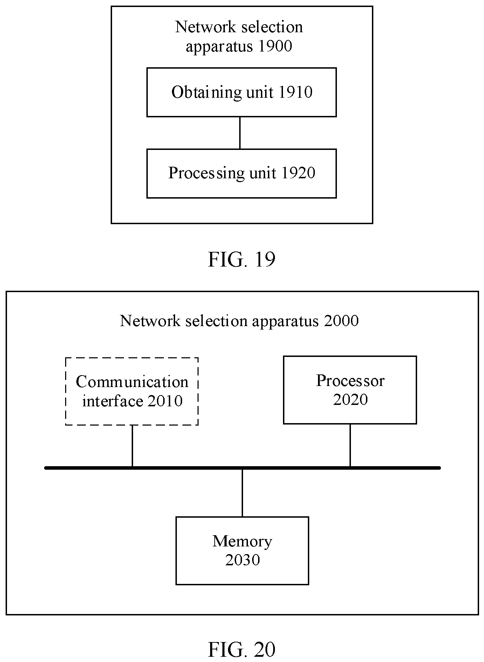

The foregoing describes in detail the network selection methods provided in embodiments of this application with reference to FIG. 1 to FIG. 18. The following describes network selection apparatuses in embodiments of this application with reference to FIG. 19 and FIG. 20. It should be understood that the apparatuses in FIG. 19 and FIG. 20 can perform the steps in the network selection methods in embodiments of this application. To avoid repetition, repeated descriptions are properly omitted when the network selection apparatuses in FIG. 19 and FIG. 20 are described below.

FIG. 19 is a schematic block diagram of a network selection apparatus 1900 according to an embodiment of this application. The apparatus 1900 may be a terminal device, or a circuit or a chip disposed in a terminal device. As shown in FIG. 19, the apparatus 1900 includes an obtaining unit 1910 and a processing unit 1920.

The obtaining unit 1910 is configured to obtain first information, where the first information includes cell information of a cell on which the terminal device camps.

The processing unit 1920 is configured to obtain first cell information or second cell information from the cell information, where the first cell information is cell information of a cell on which the terminal device camps on a fixed route, and the second cell information is cell information of a cell on which the terminal device camps in a fixed place.

The processing unit 1920 is further configured to preprocess the first cell information or the second cell information according to a preset rule, to obtain a valid camped cell, where the valid camped cell includes a first valid camped cell or a second valid camped cell, the first valid camped cell is obtained by preprocessing the first cell information according to a first preset rule, and the second valid camped cell is obtained by preprocessing the second cell information according to a second preset rule.

The obtaining unit 1910 is further configured to obtain second information, where the second information includes cell information of a first cell on which the terminal device currently camps.

The processing unit 1920 is further configured to determine that the cell information of the first cell is cell information on the fixed route or cell information in the fixed place.

The processing unit 1920 is further configured to: when the cell information of the first cell is cell information on the fixed route, determine a second cell in the first valid camped cell, or when the cell information of the first cell is cell information in the fixed place, determine a second cell in the second valid camped cell, where the second cell is a next-hop cell on which the terminal device is to camp after camping on the first cell.

Optionally, the cell information further includes a signal received power of the terminal device in the camped cell when the terminal device is handed over from the camped cell to the next-hop cell.

The processing unit 1920 is further configured to:
determine, based on the at least one signal received power, a cell measurement threshold of the terminal device in the camped cell.

The cell measurement threshold includes a measurement start threshold and/or a leaving threshold, the measurement start threshold is a threshold for starting cell measurement on the next-hop cell of the camped cell, the leaving threshold is a threshold for performing cell measurement on a neighboring cell of the camped cell, the cell measurement threshold is determined based on a largest signal received power in the at least one signal received power, and the leaving threshold is determined based on a smallest signal received power in the at least one signal received power.

Optionally, when the first cell information is obtained from the cell information, the first valid camped cell includes the first cell and the second cell, and the second cell is a historical next-hop cell that is of the first cell and that is on the fixed route. The processing unit 1920 is further configured to:

after the terminal device is disconnected from a network in the second cell, when $t < T_{min}$, determine to disable cell measurement of the terminal device;
when $T_{min} \leq t < k \times T_{min} + (1-k)T_{max}$, determine to configure a measurement interval of the terminal device as a first measurement interval, where $0 < k < 1$; and

when $t \geq k \times T_{min}+(1-k)T_{max}$, determine to configure a measurement interval of the terminal device as a second measurement interval, where the second measurement interval is less than the first measurement interval.

Herein, t represents duration after a moment at which the terminal device is disconnected from the network in the second cell, $T_{max}$ represents statistically obtained maximum recovery time for recovering connection after the terminal device is disconnected from the network in the second cell, and $T_{min}$ represents statistically obtained minimum recovery time for recovering connection after the terminal device is disconnected from the network in the second cell.

Optionally, when the first cell information is obtained from the cell information, the first valid camped cell includes the first cell, the second cell, and a third cell, and the second cell and the third cell are two different historical next-hop cells that are of the first cell and that are on the fixed route.

First frequency of the second cell serving as a next-hop node of the terminal device in the first cell is greater than second frequency of the third cell serving as a next-hop node of the terminal device in the first cell; or

a first signal strength of the terminal device in the second cell is greater than a second signal strength of the terminal device in the third cell; or
first power consumption of the terminal device in the second cell is greater than second power consumption of the terminal device in the third cell, where the first power consumption is determined based on a discontinuous reception DRX cycle and invalid radio resource control RRC connection duration of the terminal device in the second cell, and the second power consumption is determined based on a discontinuous reception DRX cycle and invalid radio resource control RRC connection duration of the terminal device in the third cell.

Optionally, the processing unit 1920 is specifically configured to:
when the first cell information is obtained from the cell information, remove, from cells corresponding to the first cell information, cells between which the terminal device performs ping-pong handover, to obtain the first valid camped cell.

Optionally, the processing unit 1920 is specifically configured to:

obtain a first cell identifier list corresponding to the fixed route, where the first cell identifier list includes at least two cell identifiers that are in a one-to-one correspondence with at least two cells on the fixed route, and an order of the at least two cell identifiers in the first cell identifier list is the same as an order of the at least two cells on the fixed route; and
remove, based on the first cell identifier list, the cells between which the terminal device performs ping-pong handover, to obtain the first valid camped cell.

Optionally, the processing unit 1920 is specifically configured to:

set a first time window in the first cell identifier list, where the first time window includes three consecutive cell identifiers in the first cell identifier list;
when a condition that a cell identifier that is in the first cell identifier list and previously adjacent to the first time window is different from the 1st cell identifier in the first time window, and the 1st cell identifier is equal to the last cell identifier in the first time window is met, obtain a first cell identifier after the first time window in the first cell identifier list, where the first cell identifier is different from the 2nd cell identifier and the last cell identifier in the first time window; and
when a condition that a second cell identifier previously adjacent to the first cell identifier is the same as the 1st cell identifier is met, delete cell identifiers from the 2nd cell identifier to the second cell identifier from the first cell identifier list; or
when a condition that the second cell identifier is different from the 1st cell identifier is met, delete cell identifiers from the last cell identifier to the second cell identifier from the first cell identifier list.

Optionally, the processing unit 1920 is specifically configured to:

set a second time window in the first cell identifier list, where the second time window includes four consecutive cell identifiers in the first cell identifier list;
when a condition that a cell identifier that is in the first cell identifier list and previously adjacent to the second time window is different from the 1st cell identifier in the second time window, and the 1st cell identifier is equal to the last cell identifier in the second time window is met, obtain a third cell identifier after the second time window in the first cell identifier list, where the third cell identifier is different from the 2nd cell identifier, the 3rd cell identifier, and the last cell identifier in the first time window; and
when a condition that a fourth cell identifier previously adjacent to the third cell identifier is the same as the 1st cell

identifier is met, delete cell identifiers from the 2<sup>nd</sup> cell identifier to the fourth cell identifier from the first cell identifier list; when a condition that the fourth cell identifier is different from the 1<sup>st</sup> cell identifier, and the fourth cell identifier is the same as the 2<sup>nd</sup> cell identifier is met, delete cell identifiers from the 3<sup>rd</sup> cell identifier to the fourth cell identifier from the first cell identifier list; or

when a condition that the fourth cell identifier is different from the 1<sup>st</sup> cell identifier, and the fourth cell identifier is different from the 2<sup>nd</sup> cell identifier is met, delete cell identifiers from the last cell identifier to the fourth cell identifier from the first cell identifier list.

Optionally, the processing unit 1920 is specifically configured to:

when the second cell information is obtained from the cell information, determine, from cells corresponding to the second cell information, at least two cells with longest camping duration, lowest power consumption, or highest received signal strengths of the terminal device, to obtain the second valid camped cell, where the second valid camped cell includes the at least two cells; and

determine, from the second valid camped cell, cells between which the terminal device performs ping-pong handover.

1920, the processing unit 1920 is specifically configured to:

when the first cell does not belong to the at least two cells, use at least one of the at least two cells as the second cell;

when the first cell belongs to the at least two cells, and the terminal device does not perform ping-pong handover between the first cell and another cell of the at least two cells other than the first cell, use at least one of the at least two cells as the second cell;

when the first cell belongs to the at least two cells, and the terminal device performs ping-pong handover between the first cell and a fourth cell of the at least two cells other than the first cell, use another cell of the at least two cells other than the first cell and the fourth cell as the second cell; or

when the first cell belongs to the at least two cells, and the terminal device performs ping-pong handover between the first cell and a fifth cell that does not belong to the at least two cells, use a cell in the at least two cells other than the first cell as the second cell.

Optionally, the first information further includes information about time when the terminal device camps on the cell corresponding to the cell information.

The processing unit is specifically configured to determine, based on the time information, that the cell information is the first cell information or the second cell information.

Optionally, the first information further includes an identifier of Wi-Fi to which the terminal device is connected when the terminal device camps on the cell corresponding to the cell information.

The processing unit is specifically configured to determine, based on the identifier of the Wi-Fi, that the cell information is the first cell information or the second cell information.

It should be noted that in this embodiment of this application, the obtaining unit 1910 and the processing unit 1920 may be implemented by a processor. FIG. 20 is a schematic block diagram of another network selection apparatus 2000 according to an embodiment of this application. As shown in FIG. 20, the apparatus 2000 may include a communication interface 2010, a processor 2020, and a memory 2030. The memory 2030 may be configured to store intermediate data for data processing, code executed by the processor 2020, and the like.

For example, the processor 2020 may obtain, through the communication interface 2010, data used for network selection, for example, cell information of a cell on which the terminal device camps. For another example, the processor 2020 may further obtain first configuration information from an AP through the communication interface 2010, where the first configuration information is used to configure a working mode of the network selection apparatus 2000 as a power consumption optimization mode.

In an implementation process, the steps in the foregoing methods may be completed by using a hardware integrated logic circuit in the processor 2020 or instructions in a form of software. The steps of the methods disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 2030, and the processor 2020 reads information from the memory 2030 and completes the steps of the foregoing methods in combination with the hardware of the processor. To avoid repetition, details are not described herein again.

For operations or steps performed by the network selection apparatus 1900 shown in FIG. 19 or the network selection apparatus 2000 shown in FIG. 20, refer to related descriptions of the operations or steps in the foregoing method embodiments. To avoid repetition, details are not described herein again.

An embodiment of this application further provides a terminal device, including the foregoing network selection apparatus.

Optionally, the terminal device further includes a modem, configured to send cell information to the network selection apparatus. Optionally, the network selection apparatus may further send third information to the modem, where the third information is used to indicate cell information of the second cell.

Optionally, the terminal device may further include an application server AP, configured to send first configuration information to the network selection apparatus. The first configuration information is used to configure a working mode of the network selection main control module as the power consumption optimization mode.

An embodiment of this application further provides a computer-readable storage medium; the computer-readable storage medium includes a computer program. When the computer program is run on a computer, the computer is enabled to perform the methods provided in the foregoing method embodiments.

An embodiment of this application further provides a computer program product including instructions, and when the computer program product is run on a computer, the computer is enabled to perform the methods provided in the foregoing method embodiments.

It should be understood that, the processor mentioned in the embodiments of the present invention may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of the present invention may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It should be understood that, descriptions such as "first" and "second" in embodiments of this application are only used as examples and used to distinguish between objects, but do not indicate a sequence or indicate a specific limitation on a quantity of devices in embodiments of this application, and cannot constitute any limitation on embodiments of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification indicates an "or" relationship between the associated objects.

It should be understood that steps or operations in the flowcharts in embodiments of this application are merely examples, and other operations or variations of the operations in the flowcharts may be further performed in embodiments of this application. In addition, each step in each flowchart may be performed in a sequence different from that presented in the figure, and it is possible that not all the operations in the figures need to be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods according to embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A network selection method, applied to a terminal device and comprising:

    obtaining first information, wherein the first information comprises cell information of a cell on which the terminal device camps;
    obtaining first cell information or second cell information from the cell information, wherein the first cell information is cell information of a cell on which the terminal device camps on a fixed route, and the second cell information is cell information of a cell on which the terminal device camps in a fixed place;
    preprocessing the first cell information or the second cell information according to a preset rule, to obtain a valid camped cell, wherein the valid camped cell comprises a first valid camped cell or a second valid camped cell, the first valid camped cell is obtained by preprocessing the first cell information according to a first preset rule, and the second valid camped cell is obtained by preprocessing the second cell information according to a second preset rule;
    obtaining second information, wherein the second information comprises cell information of a first cell on which the terminal device currently camps;
    determining that the cell information of the first cell is cell information on the fixed route or cell information in the fixed place; and
    when the cell information of the first cell is cell information on the fixed route, determining a second cell in the first valid camped cell, or when the cell information of the first cell is cell information in the fixed place, determining a second cell in the second valid camped cell, wherein the second cell is a next-hop cell on which the terminal device is to camp after camping on the first cell.

2.  The method according to claim 1, wherein the cell information further comprises a signal received power of the terminal device in the camped cell when the terminal device is handed over from the camped cell to the next-hop cell; and

the method further comprises:

determining, based on the at least one signal received power, a cell measurement threshold of the terminal device in the camped cell, wherein

the cell measurement threshold comprises a measurement start threshold and/or a leaving threshold, the measurement start threshold is a threshold for starting cell measurement on the next-hop cell of the camped cell, the leaving threshold is a threshold for performing cell measurement on a neighboring cell of the camped cell, the cell measurement threshold is determined based on a largest signal received power in the at least one signal received power, and the leaving threshold is determined based on a smallest signal received power in the at least one signal received power.

3. The method according to claim 1 or 2, wherein when the first cell information is obtained from the cell information, the first valid camped cell comprises the first cell and the second cell, and the second cell is a historical next-hop cell that is of the first cell and that is on the fixed route; and the method further comprises:

after the terminal device is disconnected from a network in the second cell,

when $t < T_{min}$, determining to disable cell measurement of the terminal device;

when $T_{min} \leq t < k \times T_{min} + (1-k)T_{max}$, determining to configure a measurement interval of the terminal device as a first measurement interval, wherein $0 < k < 1$; and

when $t \geq k \times T_{min} + (1-k)T_{max}$, determining to configure a measurement interval of the terminal device as a second measurement interval, wherein the second measurement interval is less than the first measurement interval; and t represents duration after a moment at which the terminal device is disconnected from the network in the second cell, $T_{max}$ represents statistically obtained maximum recovery time for recovering connection after the terminal device is disconnected from the network in the second cell, and $T_{min}$ represents statistically obtained minimum recovery time for recovering connection after the terminal device is disconnected from the network in the second cell.

4. The method according to claim 1 or 2, wherein when the first cell information is obtained from the cell information, the first valid camped cell comprises the first cell, the second cell, and a third cell, and the second cell and the third cell are two different historical next-hop cells that are of the first cell and that are on the fixed route;

first frequency of the second cell serving as a next-hop node of the terminal device in the first cell is greater than second frequency of the third cell serving as a next-hop node of the terminal device in the first cell; or a first signal strength of the terminal device in the second cell is greater than a second signal strength of the terminal device in the third cell; or

first power consumption of the terminal device in the second cell is greater than second power consumption of the terminal device in the third cell, wherein the first power consumption is determined based on a discontinuous reception DRX cycle and invalid radio resource control RRC connection duration of the terminal device in the second cell, and the second power consumption is determined based on a discontinuous reception DRX cycle and invalid radio resource control RRC connection duration of the terminal device in the third cell.

5. The method according to claim 1 or 2, wherein the preprocessing the first cell information or the second cell information according to a preset rule, to obtain a valid camped cell comprises:

when the first cell information is obtained from the cell information, removing, from cells corresponding to the first cell information, cells between which the terminal device performs ping-pong handover, to obtain the first valid camped cell.

6. The method according to claim 5, wherein the removing, from cells corresponding to the first cell information, cells between which the terminal device performs ping-pong handover, to obtain the first valid camped cell comprises:

obtaining a first cell identifier list corresponding to the fixed route, wherein the first cell identifier list comprises at least two cell identifiers that are in a one-to-one correspondence with at least two cells on the fixed route, and an order of the at least two cell identifiers in the first cell identifier list is the same as an order of the at least two cells on the fixed route; and

removing, based on the first cell identifier list, the cells between which the terminal device performs ping-pong handover, to obtain the first valid camped cell.

**7.** The method according to claim 5, wherein the removing cells between which the terminal device performs ping-pong handover comprises:

setting a first time window in the first cell identifier list, wherein the first time window comprises three consecutive cell identifiers in the first cell identifier list;
when a condition that a cell identifier that is in the first cell identifier list and previously adjacent to the first time window is different from the 1st cell identifier in the first time window, and the 1st cell identifier is equal to the last cell identifier in the first time window is met, obtaining a first cell identifier after the first time window in the first cell identifier list, wherein the first cell identifier is different from the 2nd cell identifier and the last cell identifier in the first time window; and
when a condition that a second cell identifier previously adjacent to the first cell identifier is the same as the 1st cell identifier is met, deleting cell identifiers from the 2nd cell identifier to the second cell identifier from the first cell identifier list; or
when a condition that the second cell identifier is different from the 1st cell identifier is met, deleting cell identifiers from the last cell identifier to the second cell identifier from the first cell identifier list.

**8.** The method according to claim 5, wherein the removing cells between which the terminal device performs ping-pong handover comprises:

setting a second time window in the first cell identifier list, wherein the second time window comprises four consecutive cell identifiers in the first cell identifier list;
when a condition that a cell identifier that is in the first cell identifier list and previously adjacent to the second time window is different from the 1st cell identifier in the second time window, and the 1st cell identifier is equal to the last cell identifier in the second time window is met, obtaining a third cell identifier after the second time window in the first cell identifier list, wherein the third cell identifier is different from the 2nd cell identifier, the 3rd cell identifier, and the last cell identifier in the first time window; and
when a condition that a fourth cell identifier previously adjacent to the third cell identifier is the same as the 1st cell identifier is met, deleting cell identifiers from the 2nd cell identifier to the fourth cell identifier from the first cell identifier list;
when a condition that the fourth cell identifier is different from the 1st cell identifier, and the fourth cell identifier is the same as the 2nd cell identifier is met, deleting cell identifiers from the 3rd cell identifier to the fourth cell identifier from the first cell identifier list; or
when a condition that the fourth cell identifier is different from the 1st cell identifier, and the fourth cell identifier is different from the 2nd cell identifier is met, deleting cell identifiers from the last cell identifier to the fourth cell identifier from the first cell identifier list.

**9.** The method according to claim 1 or 2, wherein the preprocessing the first cell information or the second cell information according to a preset rule, to obtain a valid camped cell comprises:

when the second cell information is obtained from the cell information, determining, from cells corresponding to the second cell information, at least two cells with longest camping duration, lowest power consumption, or highest received signal strengths of the terminal device, to obtain the second valid camped cell, wherein the second valid camped cell comprises the at least two cells; and
determining, from the second valid camped cell, cells between which the terminal device performs ping-pong handover.

**10.** The method according to claim 9, wherein the determining a second cell in the second valid camped cell comprises:

when the first cell does not belong to the at least two cells, using at least one of the at least two cells as the second cell;
when the first cell belongs to the at least two cells, and the terminal device does not perform ping-pong handover between the first cell and another cell of the at least two cells other than the first cell, using at least one of the at least two cells as the second cell;
when the first cell belongs to the at least two cells, and the terminal device performs ping-pong handover between the first cell and a fourth cell of the at least two cells other than the first cell, using another cell of the at least two cells other than the first cell and the fourth cell as the second cell; or
when the first cell belongs to the at least two cells, and the terminal device performs ping-pong handover between the first cell and a fifth cell that does not belong to the at least two cells, using a cell in the at least two cells other than the first cell as the second cell.

11. The method according to any one of claims 1 to 10, wherein the first information further comprises information about time when the terminal device camps on the cell corresponding to the cell information; and
the obtaining first cell information or second cell information from the cell information comprises:
determining, based on the time information, that the cell information is the first cell information or the second cell information.

12. The method according to any one of claims 1 to 10, wherein the first information further comprises an identifier of Wi-Fi to which the terminal device is connected when the terminal device camps on the cell corresponding to the cell information; and
the obtaining first cell information or second cell information from the cell information comprises:
determining, based on the identifier of the Wi-Fi, that the cell information is the first cell information or the second cell information.

13. A network selection apparatus, applied to a terminal device and comprising:

an obtaining unit, configured to obtain first information, wherein the first information comprises cell information of a cell on which the terminal device camps; and
a processing unit, configured to obtain first cell information or second cell information from the cell information, wherein the first cell information is cell information of a cell on which the terminal device camps on a fixed route, and the second cell information is cell information of a cell on which the terminal device camps in a fixed place, wherein
the processing unit is further configured to preprocess the first cell information or the second cell information according to a preset rule, to obtain a valid camped cell, wherein the valid camped cell comprises a first valid camped cell or a second valid camped cell, the first valid camped cell is obtained by preprocessing the first cell information according to a first preset rule, and the second valid camped cell is obtained by preprocessing the second cell information according to a second preset rule;
the obtaining unit is further configured to obtain second information, wherein the second information comprises cell information of a first cell on which the terminal device currently camps;
the processing unit is further configured to determine that the cell information of the first cell is cell information on the fixed route or cell information in the fixed place; and
the processing unit is further configured to: when the cell information of the first cell is cell information on the fixed route, determine a second cell in the first valid camped cell, or when the cell information of the first cell is cell information in the fixed place, determine a second cell in the second valid camped cell, wherein the second cell is a next-hop cell on which the terminal device is to camp after camping on the first cell.

14. The apparatus according to claim 13, wherein the cell information further comprises a signal received power of the terminal device in the camped cell when the terminal device is handed over from the camped cell to the next-hop cell;
the processing unit is further configured to:

determine, based on the at least one signal received power, a cell measurement threshold of the terminal device in the camped cell, wherein
the cell measurement threshold comprises a measurement start threshold and/or a leaving threshold, the measurement start threshold is a threshold for starting cell measurement on the next-hop cell of the camped cell, the leaving threshold is a threshold for performing cell measurement on a neighboring cell of the camped cell, the cell measurement threshold is determined based on a largest signal received power in the at least one signal received power, and the leaving threshold is determined based on a smallest signal received power in the at least one signal received power.

15. The apparatus according to claim 13 or 14, wherein when the first cell information is obtained from the cell information, the first valid camped cell comprises the first cell and the second cell, and the second cell is a historical next-hop cell that is of the first cell and that is on the fixed route; and the processing unit is further configured to:

after the terminal device is disconnected from a network in the second cell,
when $t<T_{min}$, determine to disable cell measurement of the terminal device;
when $T_{min} \leq t < k \times T_{min}+(1-k)T_{max}$, determine to configure a measurement interval of the terminal device as a first measurement interval, wherein $0<k<1$; and

when $t \geq k \times T_{min} + (1-k) T_{max}$, determine to configure a measurement interval of the terminal device as a second measurement interval, wherein the second measurement interval is less than the first measurement interval; and t represents duration after a moment at which the terminal device is disconnected from the network in the second cell, $T_{max}$ represents statistically obtained maximum recovery time for recovering connection after the terminal device is disconnected from the network in the second cell, and $T_{min}$ represents statistically obtained minimum recovery time for recovering connection after the terminal device is disconnected from the network in the second cell.

16. The apparatus according to claim 13 or 14, wherein when the first cell information is obtained from the cell information, the first valid camped cell comprises the first cell, the second cell, and a third cell, and the second cell and the third cell are two different historical next-hop cells that are of the first cell and that are on the fixed route;

first frequency of the second cell serving as a next-hop node of the terminal device in the first cell is greater than second frequency of the third cell serving as a next-hop node of the terminal device in the first cell; or a first signal strength of the terminal device in the second cell is greater than a second signal strength of the terminal device in the third cell; or first power consumption of the terminal device in the second cell is greater than second power consumption of the terminal device in the third cell, wherein the first power consumption is determined based on a discontinuous reception DRX cycle and invalid radio resource control RRC connection duration of the terminal device in the second cell, and the second power consumption is determined based on a discontinuous reception DRX cycle and invalid radio resource control RRC connection duration of the terminal device in the third cell.

17. The apparatus according to claim 13 or 14, wherein the processing unit is specifically configured to:
when the first cell information is obtained from the cell information, remove, from cells corresponding to the first cell information, cells between which the terminal device performs ping-pong handover, to obtain the first valid camped cell.

18. The apparatus according to claim 17, wherein the processing unit is specifically configured to:

obtain a first cell identifier list corresponding to the fixed route, wherein the first cell identifier list comprises at least two cell identifiers that are in a one-to-one correspondence with at least two cells on the fixed route, and an order of the at least two cell identifiers in the first cell identifier list is the same as an order of the at least two cells on the fixed route; and
remove, based on the first cell identifier list, the cells between which the terminal device performs ping-pong handover, to obtain the first valid camped cell.

19. The apparatus according to claim 17, wherein the processing unit is specifically configured to:

set a first time window in the first cell identifier list, wherein the first time window comprises three consecutive cell identifiers in the first cell identifier list;
when a condition that a cell identifier that is in the first cell identifier list and previously adjacent to the first time window is different from the 1st cell identifier in the first time window, and the 1st cell identifier is equal to the last cell identifier in the first time window is met, obtain a first cell identifier after the first time window in the first cell identifier list, wherein the first cell identifier is different from the 2nd cell identifier and the last cell identifier in the first time window; and
when a condition that a second cell identifier previously adjacent to the first cell identifier is the same as the 1st cell identifier is met, delete cell identifiers from the 2nd cell identifier to the second cell identifier from the first cell identifier list; or
when a condition that the second cell identifier is different from the 1st cell identifier is met, delete cell identifiers from the last cell identifier to the second cell identifier from the first cell identifier list.

20. The apparatus according to claim 17, wherein the processing unit is specifically configured to:

set a second time window in the first cell identifier list, wherein the second time window comprises four consecutive cell identifiers in the first cell identifier list;
when a condition that a cell identifier that is in the first cell identifier list and previously adjacent to the second time window is different from the 1st cell identifier in the second time window, and the 1st cell identifier is equal to the last cell identifier in the second time window is met, obtain a third cell identifier after the second time window in the first cell identifier list, wherein the third cell identifier is different from the 2nd cell identifier, the 3rd cell identifier, and the last cell identifier in the first time window; and

when a condition that a fourth cell identifier previously adjacent to the third cell identifier is the same as the 1st cell identifier is met, delete cell identifiers from the 2nd cell identifier to the fourth cell identifier from the first cell identifier list;

when a condition that the fourth cell identifier is different from the 1st cell identifier, and the fourth cell identifier is the same as the 2nd cell identifier is met, delete cell identifiers from the 3rd cell identifier to the fourth cell identifier from the first cell identifier list; or

when a condition that the fourth cell identifier is different from the 1st cell identifier, and the fourth cell identifier is different from the 2nd cell identifier is met, delete cell identifiers from the last cell identifier to the fourth cell identifier from the first cell identifier list.

21. The apparatus according to claim 13 or 14, wherein the processing unit is specifically configured to:

   when the second cell information is obtained from the cell information, determine, from cells corresponding to the second cell information, at least two cells with longest camping duration, lowest power consumption, or highest received signal strengths of the terminal device, to obtain the second valid camped cell, wherein the second valid camped cell comprises the at least two cells; and

   determine, from the second valid camped cell, cells between which the terminal device performs ping-pong handover.

22. The apparatus according to claim 21, wherein the processing unit is specifically configured to:

   when the first cell does not belong to the at least two cells, use at least one of the at least two cells as the second cell;

   when the first cell belongs to the at least two cells, and the terminal device does not perform ping-pong handover between the first cell and another cell of the at least two cells other than the first cell, use at least one of the at least two cells as the second cell;

   when the first cell belongs to the at least two cells, and the terminal device performs ping-pong handover between the first cell and a fourth cell of the at least two cells other than the first cell, use another cell of the at least two cells other than the first cell and the fourth cell as the second cell; or

   when the first cell belongs to the at least two cells, and the terminal device performs ping-pong handover between the first cell and a fifth cell that does not belong to the at least two cells, use a cell in the at least two cells other than the first cell as the second cell.

23. The apparatus according to any one of claims 13 to 22, wherein the first information further comprises information about time when the terminal device camps on the cell corresponding to the cell information; and

   the processing unit is specifically configured to determine, based on the time information, that the cell information is the first cell information or the second cell information.

24. The apparatus according to any one of claims 13 to 22, wherein the first information further comprises an identifier of Wi-Fi to which the terminal device is connected when the terminal device camps on the cell corresponding to the cell information; and

   the processing unit is specifically configured to determine, based on the identifier of the Wi-Fi, that the cell information is the first cell information or the second cell information.

25. A network selection apparatus, comprising a memory and a processor, wherein the memory is configured to store instructions, and the processor is configured to execute the instructions stored in the memory, so that the apparatus is enabled to perform the method according to any one of claims 1 to 12.

26. A computer-readable storage medium, wherein the computer-readable storage medium stores a computer program, and when the computer program is executed, the method according to any one of claims 1 to 12 is implemented.

27. A chip, comprising a processor and a communication interface, wherein the processor is configured to invoke instructions from the communication interface and run the instructions, and when the processor executes the instructions, the method according to any one of claims 1 to 12 is implemented.

FIG. 1A

FIG. 1B

FIG. 1C

1010

**ıllı China Mobile 4G**     **11:12**     ✳ 15% ▭

**Settings**

Search settings 🎤

(8) **Login Account** ＞
More available services

**Suggestions (2)**

☁ **Enable cloud backup** ✕
Easily back up and restore your data

🔒 **Lock screen** ✕
Protect the device

✈ **Airplane Mode** ◯ OFF

🚄 **Network selection power**
**consumption mode** ＞

📶 **Wireless & networks** ＞
WLAN, Dual-SIM management,
Mobile network

TO
FIG. 1D-2

1011

FIG. 1D-1

**ull China Mobile 4G**    11:12    ✳ 15% ▭

1020

←   **Travel mode**

**Power consumption optimization mode**    ON ⬤

1021

CONT. FROM FIG. 1D-1

TO FIG. 1D-3

FIG. 1D-2

CONT. FROM FIG. 1D-2
~

1020

**China Mobile 4G**     11:12     15%

← **Travel mode**

**Power consumption optimization mode**          ◯ OFF

1022

FIG. 1D-3

FIG. 2

300

```
        ┌──────────┐
        │  Start   │
        └────┬─────┘
             ▼
┌─────────────────────────────┐
│   Collect cell information   │ ～ 301
└──────────────┬──────────────┘
               ▼
┌─────────────────────────────┐
│ Obtain an original cell      │ ～ 302
│ handover path                │
└──────────────┬──────────────┘
               ▼
```

No ◄── ◇ Quantity of collection times≥n ◇ ～ 303

Yes

┌─────────────────────────────┐
│ Remove ping-pong cells, and  │ ～ 304
│ generate a valid cell        │
│ handover path                │
└──────────────┬──────────────┘

┌─────────────────────────────┐
│ Determine a network          │ ～ 305
│ selection policy             │
└──────────────┬──────────────┘
               ▼
        ┌──────────┐
        │   End    │
        └──────────┘

FIG. 3

400

```
        ┌─────────────┐
        │    Start    │
        └─────────────┘
               │
               ▼
  ┌────────────────────────────────────┐
  │ Set a time window to 3, and obtain  │
  │ three cell identifiers: $A_n$, $A_{n+1}$, │  ～ 401
  │ and $A_{n+2}$ in the time window         │
  └────────────────────────────────────┘
               │
               ▼
```

$A_{n-1}!=A_n \&\& A_n==A_{n+2}$ ? — 402 — No

Yes

Search for the $1^{st}$ $A_k$ that meets $A_k!=A_{n+2} \&\& A_k!==A_{n+1}$ — 403

$A_{k-1}==A_n$ ? — 404

Yes — No

Delete $A_{n+1}$ to $A_{k-1}$ — 405

Delete $A_{n+2}$ to $A_{k-1}$ — 406

Move the window to a next location, n++ — 407

Whether $A_{n+3}$ exists? — 408

Yes

No

End

FIG. 4

Time window

| $A_0$ | ... | $A_{n-1}$ | $A_n$ | $A_{n+1}$ | $A_{n+2}$ | $A_{n+3}$ | $A_{n+4}$ | ... |

FIG. 5

$A_n$ $A_{n+1}$ $A_{n+2}$ $A_{k-1}$ $A_k$

| A | B | A | B | A | C |

$A_n$ $A_k$

| A | C |

$A_n$ $A_{n+1}$

| A | C |

FIG. 6

$A_n$ $A_{n+1}$ $A_{n+2}$ $A_{k-1}$ $A_k$

| A | B | A | B | A | B | C |

$A_n$ $A_{n+1}$ $A_k$

| A | B | C |

$A_n$ $A_{n+1}$ $A_{n+2}$

| A | B | C |

FIG. 7

800

```
                    ┌─────────┐
                    │  Start  │
                    └─────────┘
                         │
                         ▼
    ┌────────────────────────────────────────┐
    │ Set a time window to 4, and obtain      │
    │ four cell identifiers: Aₙ, Aₙ₊₁, Aₙ₊₂,  │ ～ 801
    │ and Aₙ₊₃ in the time window             │
    └────────────────────────────────────────┘
```

Set a time window to 4, and obtain four cell identifiers: $A_n$, $A_{n+1}$, $A_{n+2}$, and $A_{n+3}$ in the time window — 801

802
$A_{n-1} != A_n \&\& A_n == A_{n+3}$ ? — No / Yes

803 — Search for the 1$^{st}$ $A_k$ that meets $A_k != A_{n+3} \&\& A_k != A_{n+2} \&\& A_k != A_{n+1}$

804 — $A_{k-1} == A_n$ ? — Yes / No

806 — $A_{k-1} == A_{n+1}$ ? — No / Yes

805 — Delete $A_{n+1}$ to $A_{k-1}$

807 — Delete $A_{n+2}$ to $A_{k-1}$

808 — Delete $A_{n+3}$ to $A_{k-1}$

809 — Move the window to a next location, n++

810 — Whether $A_{n+4}$ exists? — Yes / No

End

FIG. 8

Time window

| $A_0$ | ... | $A_{n-1}$ | $A_n$ | $A_{n+1}$ | $A_{n+2}$ | $A_{n+3}$ | $A_{n+4}$ | ... |

FIG. 9

|   $A_n$   |   $A_{n+1}$   |   $A_{n+2}$   |       |   $A_{k-1}$   |   $A_k$   |
|---|---|---|---|---|---|
| A | B | C | A | ... | A | D |

|   $A_n$   |   $A_k$   |
|---|---|
| A | D |

|   $A_n$   |   $A_{n+1}$   |
|---|---|
| A | D |

FIG. 10

|   $A_n$   |   $A_{n+1}$   |   $A_{n+2}$   |       |   $A_{k-1}$   |   $A_k$   |
|---|---|---|---|---|---|
| A | B | C | A | ... | B | D |

|   $A_n$   |   $A_{n+1}$   |   $A_k$   |
|---|---|---|
| A | B | D |

|   $A_n$   |   $A_{n+1}$   |   $A_{n+2}$   |
|---|---|---|
| A | B | D |

FIG. 11

| $A_n$ | $A_{n+1}$ | $A_{n+2}$ | | | $A_{k-1}$ | $A_k$ |
|---|---|---|---|---|---|---|
| A | B | C | A | ... | C | D |

| $A_n$ | $A_{n+1}$ | $A_{n+2}$ | $A_k$ |
|---|---|---|---|
| A | B | C | D |

| $A_n$ | $A_{n+1}$ | $A_{n+2}$ | $A_{n+3}$ |
|---|---|---|---|
| A | B | C | D |

FIG. 12

1300

Start

Determine a current serving first cell — 1301

Determine whether the first cell exists on an existing cell handover path — 1302

No

Yes

Obtain a next-hop cell of the first cell on the existing cell handover path — 1303

Obtain a receive power of a terminal device in the first cell when the terminal device is handed over to the next-hop cell — 1304

Predict a next-hop cell of a current camped cell — 1305

End

FIG. 13

1400

```
                          ( Start )
                             │
                             ▼
      ┌──────────────────────────────────────┐
  ┌──▶│   Determine a current serving first cell   │ ∿ 1401
  │   └──────────────────────────────────────┘
  │                          │
  │                          ▼
  │                   ╱────────────╲
  │       No         ╱   Determine    ╲
  └─────────────────◀ whether the first cell exists on ╲ ∿ 1402
                     ╲  an existing cell handover  ╱
                      ╲       path        ╱
                       ╲──────────────╱
                             │ Yes
                             ▼
      ┌──────────────────────────────────────┐
      │  Obtain a next-hop cell of the first cell  │ ∿ 1403
      │    on the existing cell handover path    │
      └──────────────────────────────────────┘
                             │
                             ▼
                      ╱──────────────╲
            No       ╱   Whether a     ╲    1404
     ┌──────────────◀ network disconnection ╲───────────┐
     │              ╲  occurs in the next-hop ╱  Yes     │
     │               ╲      cell      ╱                  │
     │                ╲────────────╱                     │
     ▼                                                   ▼
┌────────────────┐                          ┌────────────────────┐
│ Obtain a first signal strength │            │  Generate a measurement  │
│  RSRP#1 and a second signal  │ ∿ 1405       │ policy in the first cell based │ ∿ 1410
│     strength RSRP#2     │                    │  on recovery time after the  │
└────────────────┘                          │   network disconnection    │
     │                                        └────────────────────┘
     ▼                                                   │
     ╱──────────────╲   1406                             │
No  ╱                  ╲                                 │
┌──◀  abs(RSRP#1–RSRP#2)<TH  ╲                           │
│    ╲                  ╱                                 │
│     ╲──────────────╱                                   │
│          │ Yes                                          │
│   1407   ▼                                              │
│    ┌────────────────┐                                  │
│    │  Determine first power  │                          │
│    │ consumption and second │ ∿ 1408                    │
│    │  power consumption  │                              │
│    └────────────────┘                                  │
│          │                                              │
▼          ▼                                              │
┌──────────┐  ┌────────────────┐                         │
│ Generate a │  │  Generate a network  │                  │
│  network  │  │ selection policy based on │ ∿ 1409       │
│selection policy│ │  the first power     │               │
│ based on the │  │ consumption and the  │                │
│  RSRP#1 and │  │ second power consumption │             │
│ the RSRP#2  │  └────────────────┘                       │
└──────────┘          │                                   │
     │                │                                   │
     └────────────────┴───────────────────────────────────┘
                             │
                             ▼
                          ( End )
```

FIG. 14

DRX cycle

Very long cycle

$a_0$

Long cycle

Very short
connection
duration

Short
connection
duration

Long
connection
duration

Very long
connection
duration

$a_1$

$t_0$

$t_1$

$t_2$

Invalid RRC
connection
duration

Short cycle

FIG. 15

1600

```
                          ┌─────────────┐
                          │    Start    │
                          └──────┬──────┘
                                 │
                                 ▼
         ┌──────────────────────────────────────┐
         │        Collect cell information        │ ～ 1601
         └──────────────────┬───────────────────┘
                            │
                            ▼
         ┌──────────────────────────────────────┐
         │     Obtain N camped cells in a first area │ ～ 1602
         └──────────────────┬───────────────────┘
                            │
                            ▼
         ┌──────────────────────────────────────┐
         │   Obtain a quantity of times of handover │
         │     between every two of the N cells   │ ～ 1603
         └──────────────────┬───────────────────┘
```

Whether the quantity of times of handover in unit time is greater than a threshold — 1604

No

Yes

Determine two cells as stable camped cells — 1605

Determine frequent reselection between two cells — 1606

Determine a network selection policy for a current camped cell — 1607

End

FIG. 16

1700

```
          ┌──────────┐
          │  Start   │
          └────┬─────┘
               │
               ▼
   ┌────────────────────────────┐
   │ Obtain a current camped cell C │ ～ 1701
   └────────────┬───────────────┘
               │
      No        ▼            1702
  ┌────────◇ C∈(C1, C2, C3)? ◇──── Yes
  │                                 │
  │                                 ▼              1704
  │                   Yes ◇ C~∈(C1, C2, C3)? ◇ No
┌──────────┐          │                         │
│(C1,C2,C3)│～1703     ▼                         ▼
└────┬─────┘   ┌─────────────────┐   ┌─────────────────┐
     │         │(C1, C2, C3)–(C, C~)│～1705│ (C1, C2, C3)–C │～1706
     │         └────────┬────────┘   └────────┬────────┘
     │                  │                     │
     └──────────────────┼─────────────────────┘
                        ▼
                  ┌──────────┐
                  │   End    │
                  └──────────┘
```

FIG. 17

1800

| Obtain first information, where the first information includes cell information of a cell on which a terminal device camps | ~ 1810 |

| Obtain first cell information or second cell information from the cell information, where the first cell information is cell information of a cell on which the terminal device camps on a fixed route, and the second cell information is cell information of a cell on which the terminal device camps in a fixed place | ~ 1820 |

| Preprocess the first cell information or the second cell information according to a preset rule, to obtain a valid camped cell | ~ 1830 |

| Obtain second information, where the second information includes cell information of a first cell on which the terminal device currently camps | ~ 1840 |

| Determine that the cell information of the first cell is cell information on the fixed route or cell information in the fixed place | ~ 1850 |

| When the cell information of the first cell is cell information on the fixed route, determine a second cell in a first valid camped cell, or when the cell information of the first cell is cell information in the fixed place, determine a second cell in a second valid camped cell, where the second cell is a next-hop cell on which the terminal device is to camp after camping on the first cell | ~ 1860 |

FIG. 18

Network selection
apparatus 1900

Obtaining unit 1910

Processing unit 1920

FIG. 19

Network selection apparatus 2000

Communication
interface 2010

Processor
2020

Memory
2030

FIG. 20

## INTERNATIONAL SEARCH REPORT

| International application No. |
|---|
| **PCT/CN2020/127536** |

**A. CLASSIFICATION OF SUBJECT MATTER**

H04W 36/00(2009.01)i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 事先, predetermin+, predefin+, 确定, 小区, 下一, next, cell?, 驻留, 设定, 预先

**C. DOCUMENTS CONSIDERED TO BE RELEVANT**

| Category* | Citation of document, with indication, where appropriate, of the relevant passages | Relevant to claim No. |
|---|---|---|
| X | CN 101588624 A (CHINA MOBILE GROUP SHANGHAI CO., LTD. et al.) 25 November 2009 (2009-11-25) description, page 6, line 7 from the bottom page 10 line 2, figures 1-2 | 1-27 |
| A | CN 105122886 A (NOKIA TECHNOLOGY CO., LTD.) 02 December 2015 (2015-12-02) entire document | 1-27 |
| A | WO 2014134831 A1 (NOKIA CORPORATION et al.) 12 September 2014 (2014-09-12) entire document | 1-27 |
| A | 3GPP. "Radio link management in hierarchical networks (Release 11)" *3GPP TS 45.022 V11.0.0*, 30 September 2012 (2012-09-30), entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 January 2021** | **09 February 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/127536**

| Patent document cited in search report | | | Publication date (day/month/year) | Patent family member(s) | | | Publication date (day/month/year) |
|---|---|---|---|---|---|---|---|
| CN | 101588624 | A | 25 November 2009 | None | | | |
| CN | 105122886 | A | 02 December 2015 | EP | 2965559 | A1 | 13 January 2016 |
| | | | | JP | 2016513892 | A | 16 May 2016 |
| | | | | WO | 2014134831 | A1 | 12 September 2014 |
| | | | | US | 2016021594 | A1 | 21 January 2016 |
| WO | 2014134831 | A1 | 12 September 2014 | EP | 2965559 | A1 | 13 January 2016 |
| | | | | JP | 2016513892 | A | 16 May 2016 |
| | | | | CN | 105122886 | A | 02 December 2015 |
| | | | | US | 2016021594 | A1 | 21 January 2016 |

Form PCT/ISA/210 (patent family annex) (January 2015)

**REFERENCES CITED IN THE DESCRIPTION**

**Patent documents cited in the description**

- CN 202010105793